# EUROPEAN PATENT APPLICATION

(11) **EP 1 278 365 A2**
(43) Date of publication of application: **22.01.2003**
(21) Application number: 02254407.6
(22) Date of filing: 24.06.2002
(51) Int. Cl.: H04N 1/21

(54) **Digital camera and recycle method thereof**

(30) Priority: 27.06.2001 JP 2001194208; 04.07.2001 JP 2001203291; 27.05.2002 JP 2002151788; 13.06.2002 JP 2002172156
(71) Applicant: Nikon Corporation, Tokyo 100-8831 (JP); Nikon Technologies, Inc., Shinagawa-ku, Tokyo 142-0043 (JP)
(72) Inventor: Tanaka, Masashide, Kanagawa 213-0014 (JP); Ohmura, Akira, Kanagawa 213-0014 (JP)
(74) Representative: Whitlock, Holly Elizabeth Ann

(57) **Abstract**

A digital camera has a memory for recording function and environment of the camera upon every use thereof, or delivery of the camera to users. The memory is kept without deletion to be a history of the camera. The memory cannot be used by the user, but is take out of the camera upon its recycle for transferring the memory to a database or to a site of designing new cameras. The memory should be taken out on the authorization of the user. If the memory includes name, address, custom settings, user contract, password, or the like, such memory may be transferred to a new camera of the same user on demand. Used camera can be conveniently returned at a site where commodities irrelevant to cameras are sold, which may prevent illegal disposal of cameras.

## Description

### INCORPORATION BY REFERENCE

The disclosures of the following priority applications are herein incorporated by reference:
Japanese Patent Application No. 2001-194208 filed on June 27, 2001;
Japanese Patent Application No. 2001-203291 filed on July 4, 2001;
Japanese Patent Application No. 2002-151788 filed on May 27, 2002; and
Japanese Patent Application No. 2002-172156 filed on June 13, 2002.

### BACKGROUND OF THE INVENTION

### 1. Field of the Invention

The invention relates to a digital camera and a recycle method thereof.

### 2. Description of Related Art

In this field of the art, various types of proposals have been made in relation to a recycle system of commodities.

For example, Japanese Laid-Open Patent Applications No.9-154052, No.2000-196931, No.2000-228740 and No. 2000-253283 proposes recyclable cameras. Further, Japanese Laid-Open Patent Applications No.2001-82744 proposes an improvement of recycling commodities.

On the other hand, a rental system is also possible to be considered as a recycle system. Japanese Laid-Open Patent Applications No.10-154180, No.2000-350132, No.2001-94853 and No.2001-135023 proposes various improvements in rental systems.

However, there have been problems and disadvantages still left in the related arts, especially in managing information contained within the returned or collected commodities upon recycle.

### SUMMARY OF THE INVENTION

In order to overcome the problems and disadvantages, the invention provides a digital camera including a function unit operable upon storage of the digital image, a memory that stores the status of the function unit upon every storage of the digital image, and an output of the contents of the memory to the outside of the digital camera. The memory of status is kept without deletion to be a history of the status of the function unit. Further, the user is forbidden to use the output, but the output is to be used when the digital camera is returned for a recycle

According to the feature of the present invention above, the contents of the memory taken out of the digital camera through the output can be well utilized. In other words, the contents of the memory is transferred to a database, or to a site of designing digital cameras. The transferred contents of the memory and the statistics or analysis thereof would be a valuable feedback in planning the design, production and recycle of the future model of digital cameras. Examples of the function unit operable upon storage of the digital image are an electronic flash unit and a zooming unit, or the like. Further, examples of the status of the function unit to be stored is a value with which the function unit operates, or information representing whether or not the function unit operates upon the storage of the digital image.

Further, according to the feature of the present invention above, since a digital camera user cannot take out the contents of the memory of the digital camera, any confusion in use of the digital camera can be prevented. In order for a user of the digital camera not to use the output, the output is of a special shape different from a standard shape in common uses. Alternatively, the output may be on a special protocol different from a standard protocol in common uses, or the output may be covered.

According to a detailed feature of the present invention, the memory of status is kept within the digital camera even if the storage of digital image is removed from the digital camera. Thus, the status of the function unit upon the storage of the digital image is safely kept without deletion.

According to another feature of the present invention, a digital camera includes a sensor of an environment of the digital camera, a memory that stores the output of the sensor upon every storage of the digital image caused by a release member, and an output of the contents of the memory. Examples of the environment sensor include a thermometer, a hygrometer, a barometer, a noise meter and a global positioning. Thus, the history of the environment of the digital camera is stored upon its usage.

According to still another feature of the present invention, a digital camera includes a memory that stores the time when the release member causes the storage of the digital image upon every storage of the digital image, and an output of the contents of the memory to the outside of the digital camera. The user is forbidden to use the output. Accordingly, the history relating to time such as frequency in use of the digital camera can be stored without confusion in uses.

According to a further feature of the present invention, a digital camera includes a memory that stores the history of delivery of the digital camera, and an output of the contents of the memory to the outside of the digital camera. The user is forbidden to use the output. Accordingly, the history of delivery of the digital camera from its shipment to the return can be stored without confusion in uses.

According to another feature of the present invention, a digital camera includes a first memory that stores data relating to the usage of the digital camera, an output of the contents of the first memory to the outside of the digital camera, and a second memory that stores an authorization by the user to use the output. When the authorization to use the output is not stored in the second memory, the contents of the first memory is not taken out from the returned digital camera. Accordingly, the contents of the memory can be taken out from the collected digital camera without causing a trouble with the user such as invasion of privacy.

According to still another feature of the present invention, a digital camera includes a first member to cause a first function relating to storage of a digital image, a second member to cause a second function incapable of being caused by the first member, a memory that stores information of the second function in response to the second member, and an output of the contents of the memory to the outside of the digital camera. The memory of the information is kept without deletion to be a history of the second function. Accordingly, the history of the operation other than the storage of the digital image such as a playback of the stored digital image can be stored.

According to a further feature of the present invention, a recycle method of a digital camera having a memory for storing data other than digital image is provided. The method includes the steps of receiving the digital camera returned from a user, confirming an authorization by the user to take out the contents of the memory, taking out the contents of the memory on the confirmation of authorization, and putting the returned digital camera to a recycle.

More specifically, examples of the data in the memory include a history of the usage of the digital camera, and a history of the delivery of the digital camera. The confirming step includes a step of taking a sign of the authorization out of the returned digital camera for example. Alternatively the confirming step may include a step of directly asking the user for the authorization. An example of the putting step includes a step of transferring the returned digital camera to a site of recycling digital cameras.

According to the recycle method described above, the contents of the memory can be taken out from the returned digital camera without causing a trouble with the user such as invasion of privacy.

According to a detailed feature of the invention, the recycle method further includes a step of transferring the taken-out contents of the memory to a database, or a step of transferring the taken-out contents of the memory to a site of designing digital cameras. Thus, the contents of the memory of the returned digital camera is effectively utilized.

In the method above, another example of the data other than digital image to be stored in the memory is the data peculiar to the user of the returned digital camera. An example of such data is the customer information including one or combination of name, address, custom settings, user contract, and password. According to a detailed feature of the invention, the method further includes a step of transferring the taken-out data peculiar to the user to a new digital camera gotten or to be gotten by the same user.

According to the present invention, another recycle method of a digital camera having a memory storing a data other than digital image is provided. The recycle method includes the steps of purchasing with a transportation system commodities irrelevant to the digital camera, selling the commodities, receiving the returned digital camera at a place where the commodities are sold, and transporting with the transportation system the returned digital camera to a recycle. An example of the place where the commodities are sold is a convenience store. By the method, the disused digital camera can be returned while daily shopping, so that illegal disposal thereof can be prevented.

According to the present invention, another recycle method with a computer for a digital camera having a memory storing data other than digital image is provided. The method includes the steps of taking out the contents of the memory of a first digital camera, and transferring the taken-out contents of the memory to the memory of a second digital camera. The transfer of the data from the first digital camera to the second digital camera according to the above feature can save a troublesome manual input of the data to the second digital camera otherwise necessary.

Other features and advantages according to the invention will be readily understood from the detailed description of the preferred embodiments in conjunction with the accompanying drawings.

### BRIEF DESCRIPTION OF THE DRAWINGS

Fig. 1 is a block diagram showing a rental system according to a first embodiment of the present invention.
Fig. 2 is a block diagram showing a rental center in detail according to the first embodiment of the present invention.
Fig. 3 is a block diagram showing a system according to a second embodiment of the present invention.
Fig. 4 is a flow chart showing the procedure of the local computer according to the second embodiment.
Fig. 5 is a table showing an example of a charge system for a digital camera rental system.
Fig. 6 is a block diagram showing construction of a digital camera suitable for the above-described rental system.
Fig. 7 is a block diagram showing a general center in detail.
Fig. 8 is a flow chart showing procedure of the cost control.
Fig. 9 is a block diagram showing a system according to a third embodiment of the present invention.
Fig. 10 is a block diagram showing construction of a digital camera according to a fourth embodiment of the present invention.
Fig. 11 is a block diagram showing a service system according to the fourth embodiment of the present invention.
Fig. 12 is a table showing summarized fee structure and fee adjustment.
Fig. 13 is a block diagram showing construction of a digital camera according to a fifth embodiment of the present invention.
Fig. 14 is a block diagram showing a collection service system according to the fifth embodiment of the present invention.
Fig. 15 is a flow chart showing a collection procedure carried out by the computer.
Fig. 16 is a block diagram showing the construction of a recycle system according to a sixth embodiment of the present invention.
Fig. 17 is a functional block diagram showing the inner composition of the computer terminal.
Figs. 18A and 18B are flow charts showing the control procedure carried out by the computer terminal of the recycle system.
Fig. 19 is an example of the selection page.
Fig. 20 is a flow chart showing the recycle system according to a seventh embodiment of the present invention.
Fig. 21 is a flow chart showing the control of the recycle system according to an eighth embodiment of the present invention.
Fig. 22 is a flow chart showing the control procedure of the recycle system according to the eighth embodiment.
Fig. 23 is a flow chart showing the rental procedure of a rental system according to a ninth embodiment of the present invention.
Fig. 24 is a flow chart showing the control procedure for collecting digital cameras according to the rental system of the ninth embodiment.

### DESCRIPTION OF THE PREFERRED EMBODIMENTS

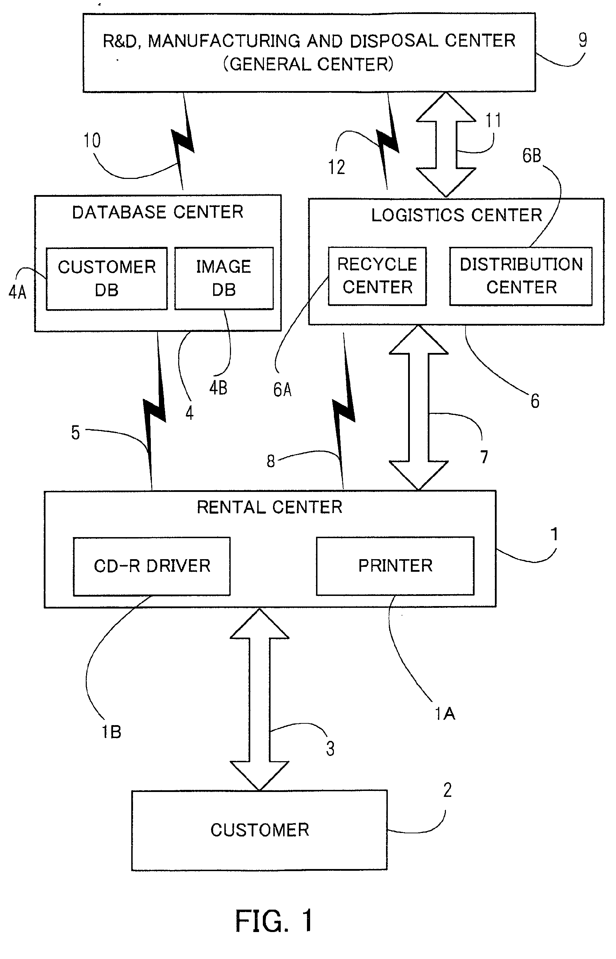

A first embodiment of the present invention is described below with reference to accompanying drawings. Fig. 1 is a block diagram showing a rental system according to a first embodiment of the present invention in which digital cameras are distributed as rental commodities. A number of rental centers 1 are dispersedly arranged in a corner of a numbers of shops such as rental video shops and convenience stores, in which customers 2 directly visit nearby rental center 1 for borrowing or returning digital cameras. In returning a digital camera, you are not necessary to bring it to the rental center 1 where the digital camera was borrowed, you can bring it any rental center 1 of the rental system.

As described later, image information recorded in the digital camera is read out by the rental center 1 when the digital camera is returned. The read out image information is returned to the customer as requested in the form of printed image by a printer 1A such as a silver halide printer. The customer may request in the form of a CD-R on which the read out image information is recorded. In this case, a CD-R on which the image information is recorded by a CD-R driver 1B is delivered to the customer. The arrow 3 denotes a delivery route whereby digital cameras and recorded media such as print and CD-R are delivered to customers over the counter.

Moreover, with the consensus of the customer, the rental center 1 reads out the using condition of the camera at the time of returning the digital camera.

Database center 4 is connected with a plurality of rental centers 1 by means of communication network 5. Although database center 4 may usually be one in a single rental system, the database center 4 may be divided into more than one according to circumstances. Communication network 5 is the Internet or a dedicated circuit in the rental system. On the basis of information from the rental center 1, customer database 4A records information of a new customer such as name, address, phone number, mail address, and credit card number, and issues customer ID number. In the case of a new customer, private information such as age, sex, etc. is recorded on customer database 4A with the consensus of the customer. The private information is strictly controlled by a contract with the customer. Moreover, customer database 4A records and controls information regarding borrowing, returning and using of each commodity to carry out statistic information processing of each commodity on the basis of the information.

It is possible for the customer to ask rental system to keep the read out image information. In this case, image information is transmitted to the database center 4 through communication network 5 to be stored in the image database 4B. In accordance with a future request of the customer, the stored image is transmitted to rental center to deliver the customer prints or CD-R as required. Moreover, it is possible for a customer to access directly to database center 4 through a personal computer to take a view of the stored image of the customer and to ask to produce its print.

A logistics center 6 is connected to rental center 1 by a distribution route 7 to make an exchange of digital cameras. Although the logistics center 6 may usually be one in a single rental system, the logistics center 6 may be divided into more than one according to circumstances. Distribution route 7 makes it possible to exchange digital cameras within a plurality of rental centers 1 in order to have a proper assortment of digital cameras in each rental center 1 and to provide new models to each rental center 1. Distribution center 6b exchanges digital cameras within rental centers 1 and has a function of inventory control. Existence of the distribution center 6b makes it possible that a customer can return a digital camera to any rental center 1 different from where the digital camera was borrowed.

Digital cameras returned to each rental center 1 are sent to the logistics center 6 through the distribution route 7. In the logistics center 6, digital cameras are cleaned, exchanged battery and parts, and repaired broken portion in a recycle center 6A, and returned to the rental center 1 from the distribution center 6b through the distribution route 7. In order to control these exchanges of digital cameras, each rental center 1 and the logistics center 6 are connected with a communication network 8. By the way, instead of returning all cameras returned to the rental center 1 to the logistics center, only those that need to be repaired in the recycle center may be sent to the logistics center after carrying out preliminary check in the rental center 1. In this way, digital cameras which have no problems to rent out again can be immediately stored in warehouse for providing another rental.

R&D, manufacturing and disposal center (hereinafter called "general center") 9 takes charge of general function including ordinary research and development, manufacturing as well as disposal. Although the general center 9 may usually be one in a single rental system, the general center 9 may be divided into more than one according to circumstances. Moreover, a plurality of functions of a general center 9 may be divided into a plurality of centers locating in different locations.

The general center 9 is connected with the database center 4 by a communication network 10 to receive statistical information of commercial distribution regarding mainly the customer database 4A. Commercial distribution information is, first of all, used for production adjustment in the general center 9 such that digital cameras increasing frequency in rental are increased production, or those loosing in popularity are decreased/discontinued production. Since commercial distribution information includes information regarding personal information as well as purpose of using a digital camera, these information as well as variation in quantity of distribution can be reflected in R&D, manufacturing and disposal planning of a next model. In the case of rental comparison with ordinary sale, since marketing information can be obtained perfectly in real time, the response to product planning becomes dramatically fast. In addition, the response from the market can be obtained extremely fast.

The general center 9 is connected with the logistics center 6 by a distribution route 11. Through the distribution route 11, newly manufactured digital cameras are delivered to the logistics center 6, and digital cameras unable to repair or increasing stock because of loosing in popularity are returned from the logistics center 6 to the general center 9 for the purpose of disposal. In order to control the distribution of digital cameras, the general center 9 and the logistics center 6 are connected by a communication network 12.

Through the communication network 12, individual information as well as statistical information regarding cleaning, parts exchange, repair, etc. in the recycle center 6A are transmitted to the general center 9. In the general center 9, the information from the recycle center 6A are also reflected in R&D, manufacturing and disposal planning of a next model. Moreover, information regarding cost down of recycle process obtained in the work record in the recycle center 6A is transmitted to the general center 9 through the communication network 12 to be reflected in R&D, manufacturing and disposal planning of a next model.

In the rental system described above, digital cameras are not disposed in the customer's level. Since disposal function of the general center 9 is included in the product circulation, no digital camera is come out from the rental system as a reject, so that zero-emission for the global environment can be accomplished.

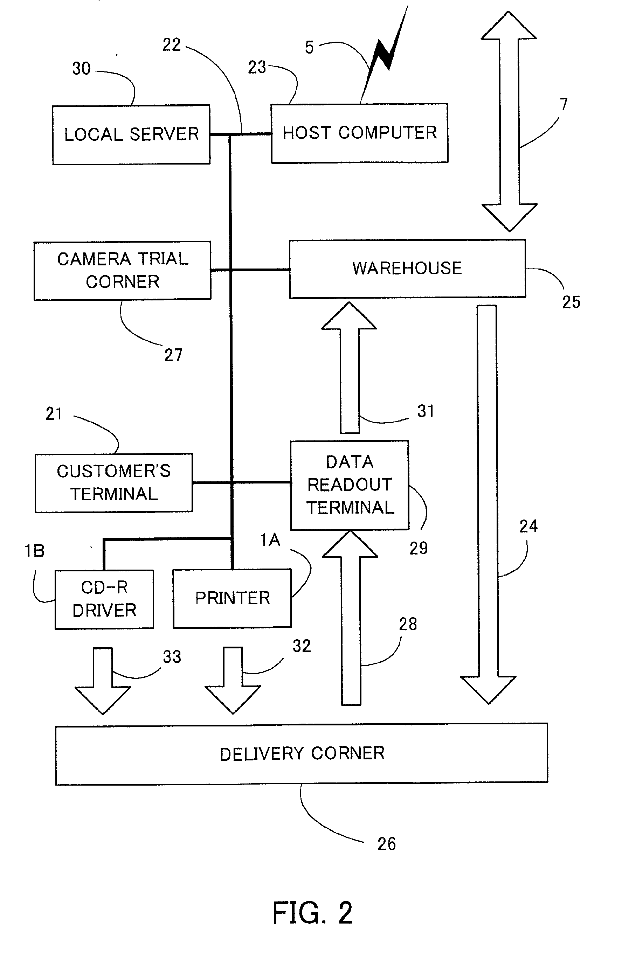

Fig. 2 is a block diagram showing the rental center 1 in detail according to the first embodiment of the present invention. In Fig. 2, a portion relevant to that shown in Fig. 1 is denoted by the common reference number. Customer's terminal 21 is secured enough numbers such that the customers visiting the rental center 1 are not necessary to wait. New customer inputs customer control information such as name, address, telephone number, mail address, credit card number, etc. by using any one of vacant customer's terminal 21 with the help of the display. Privacy information such as age, sex, etc. is also input with the consensus of the customer. When providing private information, the customer is awarded the privilege of receiving a small token as well as information regarding coming new product and new service suitable for the private information.

The information is transmitted to a host computer 23 through a LAN 22. The host computer 23 communicates with the database center 4 through the communication network 5 and issues a customer ID number on the basis of the communication. The customer can receive a customer card formed on the basis of the customer control information and the customer ID number from the customer's terminal 21. By the way, instead of visiting the rental center 1, customer can receive the customer card through home delivery by accessing to the database center 4 directly from a customer's personal computer through the Internet and filling in predetermined items.

The customer necessary for renting a digital camera makes the customer's terminal 21 read the customer card to designate the camera and inputs rental conditions such as rental period, etc. The input data is transmitted to the host computer 23. On completion of acceptance of the rental, the host computer 23 makes the customer's terminal 21 issue an exchange ticket as well as makes a warehouse 25 send the designated digital camera to a delivery corner 26 through a delivery means 24. The customer can receive the digital camera at the delivery corner 26 by showing the exchange ticket. In order for the customer to be able to return the digital camera to any rental center, the host computer 23 transmits the customer's rental data to the database center 4 through the communication network 5.

Various kinds of digital cameras are prepared in a camera trial corner 27. A customer can use these digital cameras by way of trial in the camera trial corner 27 prior to designate the camera. In addition, an interactive terminal is arranged for guiding in accordance with items how to use a digital camera for a customer not familiar to digital cameras. On the display of the terminal, an image of the digital camera that the customer is going to use by way of trial is shown, so that the customer touches an operating portion of the digital camera shown on the display where the customer does not know how to use in comparison with the digital camera actually holding in the hand. Accordingly, the request for explanation regarding the operating portion is accepted, so that the customer receives the explanation how to use the operating portion.

The using data of digital cameras by way of trial and the using data of the usage guidance in accordance with items are monitored by the host computer 23, and the information is transmitted to the database center 4 through the communication network 5 to be recorded in the customer database 4A. These customer information and its statistic information are sent from the database center 4 to the general center 9 to be reflected in R&D, manufacturing and disposal planning of a future model. For example, an operating portion receiving a lot of request for usage guidance is improved in a user-friendly manner.

A customer visiting a rental center after finished shooting makes a customer terminal 21 read-in the customer card and inputs that the camera is brought back. When the customer only input that the camera is brought back, it means default order that all image data in the camera are to be printed and stored in the image database 4B. In the case of silver halide film, this corresponds to the order of development and prints at the same time and to preparing for additional order of prints. When a customer places a different order, the customer inputs a desired image order in accordance with the guidance of the customer terminal 21. After this procedure, the customer returns the digital camera to the delivery corner 26. A delivery means 28 delivers the digital camera from the delivery corner 26 to a data readout terminal 29 whereby shot image data and information of the camera usage are readout. The readout image data and the information of the camera usage are sent to a local server 30 to be stored.

Instead of above-described embodiment, it is also possible that the digital camera is constructed to be able to receive an image order with memorizing the data input from the customer terminal 21 on the occasion of rental. In the type of embodiment, on returning the digital camera, the customer may just return the camera to the delivery corner 26 not necessary to make the customer terminal 21 readout the customer card or to input return data and image order data. In this case, the data readout terminal 29 reads out shot image data, information of camera usage, return data, and image order data to send the host computer 23.

After completion of readout, the digital camera is delivered to the warehouse 25 by a delivery means 31. As described above, the rental center 1 and the logistics center 6 are connected with the distribution route 7, so that returned digital cameras are delivered from the warehouse 25 to the logistics center 6, and digital cameras to be rented are delivered from the logistics center 6 to the warehouse 25.

When the instruction of "print" is included in the image order data, the image data is sent from the local server 30 to the printer 1A to print, and the print is delivered to the delivery corner 26 through a delivery means 32. The customer can receive prints when returning the digital camera. On the other hand, when the instruction of "writing on a CD-R" is included in the image order data, the image data is sent from the local server 30 to the CD-R driver 1B, and the CD-R on which the image data is written is delivered to the delivery corner 26 through a delivery means 33. Moreover, when the instruction of "keeping of the shot image data" is included in the image order data, the image data stored in the local server 30 is transmitted from the host computer 23 to the database center 4 through the communication network 5 to be stored in the image database 4B. The information of camera usage stored in the local server 30 is transmitted from the host computer 23 to the database center 4 through the communication network 5 to be stored in the customer database 4B regardless of the order cases. On this occasion, the information of data order is also transmitted to the database center 4 as statistic information to be stored in the customer database 4B in the same way.

The system shown in Fig. 2 may be concentrated in one location. In this case, delivery means 24, 28, 31, 32 and 33 are not necessary, so the delivery from the data readout terminal 29 to the warehouse 25 is carried out manually by a clerk. If the operation of terminals such as the customer terminal 21 and the terminal in the camera trial corner is carried out by clerks, all procedure can be completed by the communication between the customer and the clerk on the delivery corner.

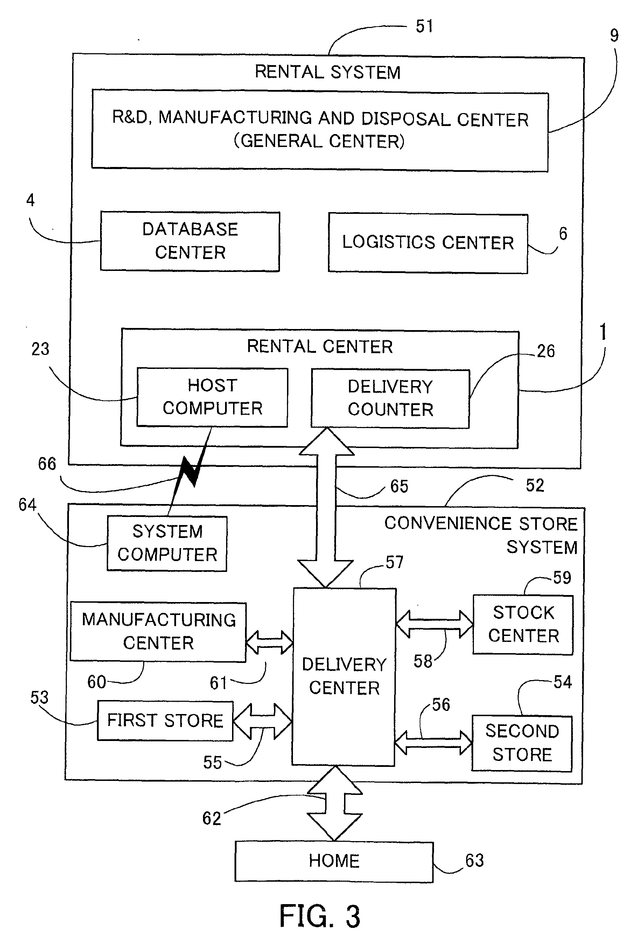

Fig. 3 is a block diagram showing commercial commodity providing system according to a second embodiment of the present invention, in which a digital camera as a commercial commodity is circulated by using an existing convenience store system. A rental system 51 includes the rental center 1, the database center 4, the logistics center 6, and the general center 9 according to the first embodiment shown in Fig. 1. Since the detail of these construction is in common with Fig. 1, the illustration using block diagram in each center and the explanation of the function in the rental system 51 are abbreviated. In addition, since the detail of the rental center 1 is in common with that in Fig. 2, the illustration and explanation of the system except the host computer 23 and the delivery corner 26 are abbreviated.

In a convenience store system 52, a first store 53 and a second store 54 are connected with a distribution center 57 by a route 55 and a route 56, respectively, so as to be delivered commercial commodities. Although only two stores are shown for the simplicity, a lot of stores exist actually. The distribution center 57 acts as a hub of distribution in the convenience store system 52 and is connected with the a stock center 59 through a distribution route 58 so as to receive stock to be supplied to the stores and to return commodities according to circumstances. In commodities right out of the factory, commodities from a manufacturing center 60 are delivered to the distribution center 57 through a distribution route 61. Customer can purchase a commodity visiting nearby store such as the first store 53 and the second store 54 or placing an order through telephone or communication system to receive at home 63 by home delivery through distribution route 62. The distribution control and the payment settlement are controlled in centralized manner by a system computer 64. In each block, not shown, such as the first store 53 in the convenience store system, a local computer is arranged to exchange data for delivery and payment settlement with the system computer 64.

In the second embodiment, the delivery corner 26 in the rental center 1 in the rental system 51 is connected with the distribution center 57 by a distribution route 65 of the convenience store system 52. The host computer 23 in the rental center 1 communicate with the system computer 64 of the convenience store system 52 by a communication network 66 acting as a window of the rental system 51 to carry out delivery control and payment settlement.

At first, renting out a digital camera employing the convenience store system 51 is explained. The digital camera ready to rent out is delivered from the delivery corner 26 to the distribution center 57 through the distribution route 65 just same as other commodities in the convenience store system 52, and is further delivered to the first store 53, etc. by the distribution route 55. In this case, the convenient store system 52 accepts claim of a "cost price" from the rental system 51 just same as ordinary purchase. The convenience store system 52 displays the digital camera at the first store 53, etc. at a "sales price" added a margin to the "cost price". For a customer, this "sales price" means the rental cost of the digital camera and the cost for prints. Although the rental and charge system is described later in detail, the system according to the second embodiment is similar to the distribution system of a "disposable camera" such that you obtain a camera, "return" it to a lab after finished shooting, and receive only images.

A customer requesting for renting out a digital camera visits, for example, the first store 53, brings a digital camera from a display in the first store 53 to a cashier similar to ordinary commodities, and pay the "sales price". At that time, information in the customer card in the rental system, a digital camera number, the date, etc. are input to the local computer in the cashier of the first store 53 to inform to the host computer 23 through the system computer 64. In this case, when the payment is carried out by using an IC card issued from the convenience store system, the information can be input easily and the "renting out" is completed with just the same labor for paying a bill of the other ordinary commodities in the convenience store.

By the way, a customer may receive a digital camera by delivery to the home 63 using the distribution route 62 of the convenience store system 52 without visiting the first store 53.

The customer finished shooting returns the digital camera to the cashier of the first store 53 or the like. The cashier of the first store 53 inputs necessary information such as a digital camera number, image order data, the way to receive prints and sends the received digital camera to the delivery corner 26 via the distribution center 57 through the distribution routes 55 and 65. The information input into the local computer of the cashier of the first store 53 is transmitted to the host computer 23 through the system computer 64. In this case also, when the customer provides the IC card, the necessary information can be input easily. In addition, when the image order data and the way to receive prints can be input in the digital camera, the labor to input information at the first store 53 when returning the digital camera is alleviated.

By the way, the customer may return the digital camera to the second store 54 not limiting to the first store 53 where the digital camera was rented out. Moreover, the customer can return the digital camera from the home 63 by using the distribution route 62. Furthermore, it is needless to say that the customer may directly return the digital camera to the delivery corner 26 of the rental center 1.

When the image order of a customer is not only the keeping of the shot image data, the rental system 51 records the image data in the form of print or CD-R according to the order to prepare providing at the delivery corner 26. The prints or the CD-R is delivered to the distribution center 57 through the distribution route 56, then to the first store 53, the second store 54, or the home 63 in accordance with the customer's instruction. In the case of delivering to a store, the prints or the CD-R is kept in the store until the customer visit to receive it.

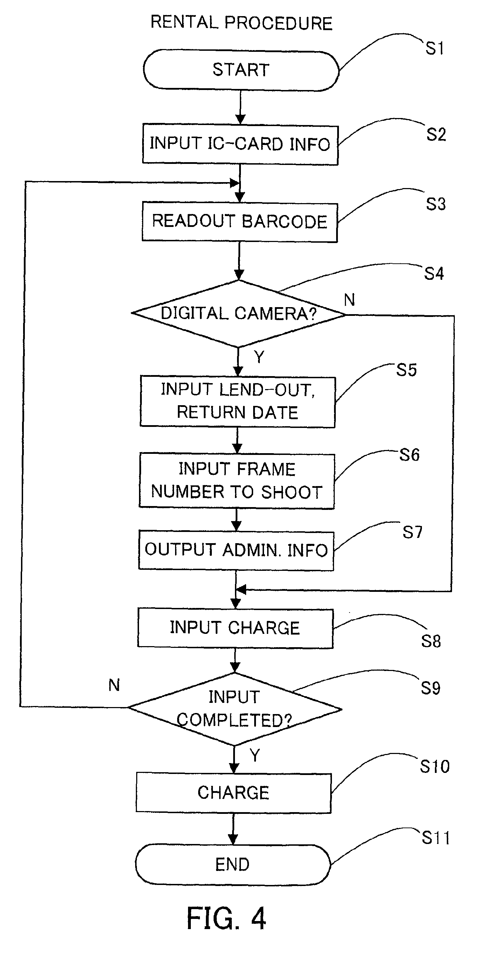

Fig. 4 is a flow chart showing the procedure of the local computer in the first store 53 and the like according to the second embodiment. The local computer deals with the rent-out control and accounting of the digital camera rental system as well as accounting procedure of ordinary commodities. In this embodiment, it is explained such case as an example that the billing and payment are carried out by the IC card issued to the customer registered to the convenience store system.

When a customer brings a digital camera with other ordinary commodities to the cashier and a provided IC card is inserted in the slot of the cashier, the flow starts from the step S1 In step S2, information in the IC card is input to the local computer and the customer is identified. In step S3, information stored in the barcode attached to each commodity brought to the cashier is readout one after another by a barcode reader. In step S4, the commodity is identified by the information readout by the barcode reader and checked whether the commodity is a digital camera or not.

In step S4, when the commodity is not a digital camera, it is ordinary commodity. Accordingly, the flow goes to step S8 for inputting the price of the commodity. In step S9, whether the input of all commodities has been completed or not is asked. When the incompletion is input within a predetermined time, the flow returns to step S3 for reading out information of the next commodity. When the commodity is an ordinary commodity, the above-described steps are repeated. When the completion is input in step S9, or when a predetermined time period has passed without any input, the flow goes to step S10. In step S10, each price is added up and the total amount is charged. The charge information is input to the IC card.

On the other hand, in step S4, when the commodity is a digital camera, the flow goes to step S5 including communication with the customer shown as below. By the way, when the commodity is a digital camera, the information such as the ID number of the digital camera, the maximum frame number to be able to shoot, etc. has been automatically input from the barcode information readout in step S3 to the computer.

In step S5, the input date is automatically input as a rent-out date and the prearranged restoration date is input based on the customer's request. Unless otherwise specific request from the customer, the date of one week after the rent-out date is automatically input as a default value of the item. In step S6, the estimated frame number to shoot is input on the basis of the customer's request. Unless otherwise specific request from the customer, the maximum frame number to be able to shoot readout from the barcode information is also automatically input as a default value of the item.

In step S7, the date information input in step S5, the customer information input in step S2, and the ID number of the digital camera input in step S3 are output from the local computer as rent-out control information to be transmitted to the host computer 23 through the system computer 64.

In step S8, when the commodity is a digital camera, the charge is automatically calculated and input in accordance with the ID number of the digital camera, the rent-out date, the prearranged restoration date, and the estimated frame number to shoot.

By the way, the order of process from step S5 to step S8 is not limited to the order shown in Fig. 4 and may be changed in a suitable order. Moreover, in the case of an embodiment that the rent-out condition of a digital camera is set uniformly and the required information such as the charge is input as a fixed value readout from the barcode information, the steps S5 and S6 are automatically processed without hearing customer's request. The above-described barcode may be printed on the face of the digital camera.

Another embodiment for obtaining good flow at the cashier by eliminating the question to the customer in steps S5 and S6 can be considered as described below. Although the kind of the digital camera is the same, digital cameras are displayed on the convenience store as a plurality of commodities having different barcode on the package of the digital camera according to the rent-out condition such as rent-out terms and the frame number to be able to shoot. For example, one commodity shown in the display is attached a price of 1500 yen for tree days of the rent-out term and 25 frames of the frame number to be able to shoot, and another one is 2600 yen for one week and 50 frames. In this embodiment, although various "assortment" is required in accordance with the diversified customer's demand, when the customer just selects a desired "commodity" and brings it to the cashier, the required information in steps S5 and S6 can be automatically input in an instant by reading out the barcode.

As described above, the rent-out control and accounting in the digital camera rental system is carried out in the flow of the cashier in the convenience store system using an IC card.

When the system can identify a customer by using a credit card other than an IC card, the rent-out control and accounting in the digital camera rental system can be carried out in the accounting flow of the above-described convenience store system. In this case, step S10 becomes a process for drawing the price from a bank account, etc. of a customer.

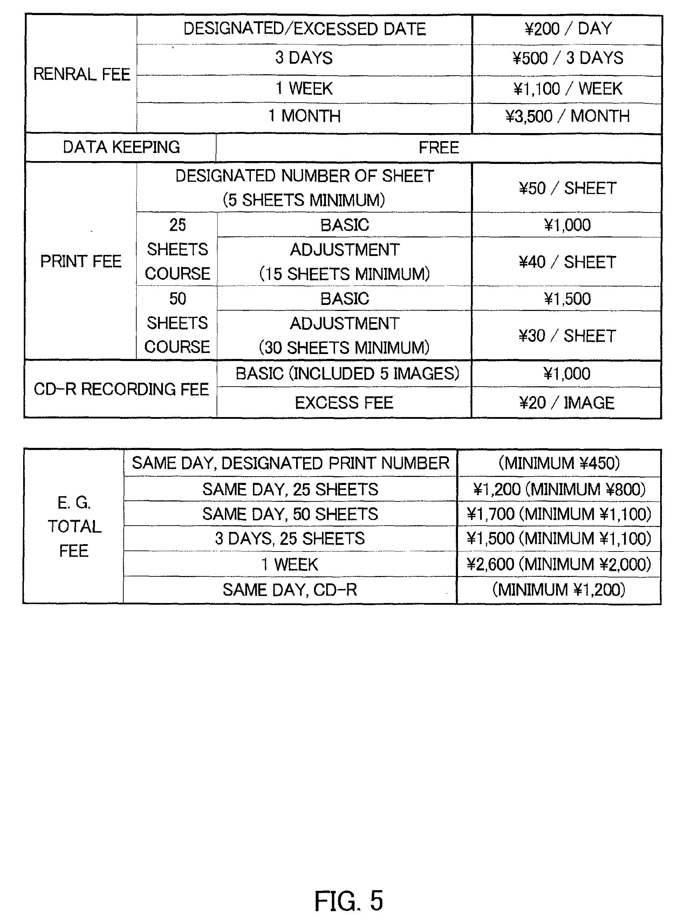

Fig. 5 is a table showing an example of a charge system for a digital camera rental system. As shown in the column "designate term of days" in the section "rental fee" in Fig. 5, although the rental fee is basically 200 yen per day, there are discount courses such as 500 yen for 3 days and 2 nights, 1100 yen for a week (8 days, until the same day of the next week), and 3500 yen for a month (until the same day of the next month). The longer the term, the cheaper the fee. By the way, once the course is determined, you cannot change after that. The fee for the excess date from the course is 200 yen per day for all courses. The fee for keeping data is free.

Usually, the fee at the time of rent-out is charged in accordance with the course designated by the customer. However, it is possible for an embodiment that the charge for one month course is uniformly applied at the time of rent-out as a deposit for the rental, and at the time of return the most favorable course for the customer is applied, so that the difference is returned to the customer.

Although print fee is basically 50 yen per sheet, you have to order at least 5 sheets, so that the minimum print fee is 250 yen. In addition, there are a 25-sheet course that 1000 yen for 25 sheets, and a 50-sheet course that 1500 yen for 50 sheets. When you select these courses, a digital camera equipped with a memory having a capacity larger than respective capacity is rent out. The above-described courses correspond to a 25 frames shot and a 50 frames shot respectively when the film is ordered for development and print at the same time in the silver halide film camera. However, in the digital camera, it is not necessary to shoot all capacity, so, in the 25-sheet course, at least 15 sheets may be ordered for print. Accordingly, unnecessary print fee is adjusted by 40 yen per sheet. As a result, the minimum charge for the 25-sheet course is 600 yen. In other words, the 25-sheet course is a course that prints from 15 sheets up to the number of sheets corresponding to the full capacity by the rate of 40 yen per sheet. Likewise, in the 50-sheet course, when the minimum sheet number of 30 sheets print is ordered, the course allows to print by 30 yen per sheet.

When you order recording on a CD-R, a basic fee including 5 images recording is 1000 yen; 6 images and over costs 20 yen per each image as an excess fee.

It happens often that an adjust amount in the print fee and an excess amount in the CD-R recording are not clear at the time of rent-out, so each basic fee is charged to the IC card of the customer at the time of rent-out, and the difference is adjusted including excess term charge in the rental fee at the time of return. For example, when a customer uses a 50-sheet course for the term of 1 week, the total fee 2600 yen is charged at the time of rent-out. When the customer returns the digital camera with a 35-sheets-print order without excess term, the print fee of 450 yen for 15 sheets is paid back to the IC card of the customer. For another example, when a customer uses a 25-sheet course for the term of 3 days, the total fee 1500 yen is charged at the time of rent-out. When the customer returns the digital camera with a 20-sheets-print order with excess term of 2 days, the excess fee charge of 400 yen and the print fee of 200 yen repayment for 5 sheets result in additional charge of 200 yen to the customer's IC card.

The lower portion of Fig. 5 shows several cases of charges based on the charge system. The first example is a case that a customer returns the same day with the designated number of print. In this case, 200 yen of the 1 day rental fee and 250 yen of the minimum print number of 5 sheets make 450 yen of the minimum rental fee. The fourth example is a case of the 3 days rental and a 25-sheets-print course, so 500 yen of the rental fee and 1000 yen of the print fee make 1500 yen of the total charge. In this case, the number of print can be adjusted such as the minimum number of 15 sheets. Accordingly, the print fee becomes 600 yen, so that the minimum fee becomes 1100 yen. The other examples can be understood likewise, so that the explanation is abbreviated.

Although a limit is applied to the rental term in the case of Fig. 5, a rental fee system may be possible as another embodiment that the rental term is unlimited by paying a predetermined amount of fee, and using within the warranty period of battery at customer's responsibility. The manner of return in the embodiment becomes similar to that in the disposable camera in the silver halide photography. Although the disposable camera is not a rental commodity but a commodity to be purchased, when it is returned to a lab after shooting, it does not remain in user's hand but is recycled to be sold again as a commodity, so that it actually has a distribution to be virtually rented out for shooting and returned.

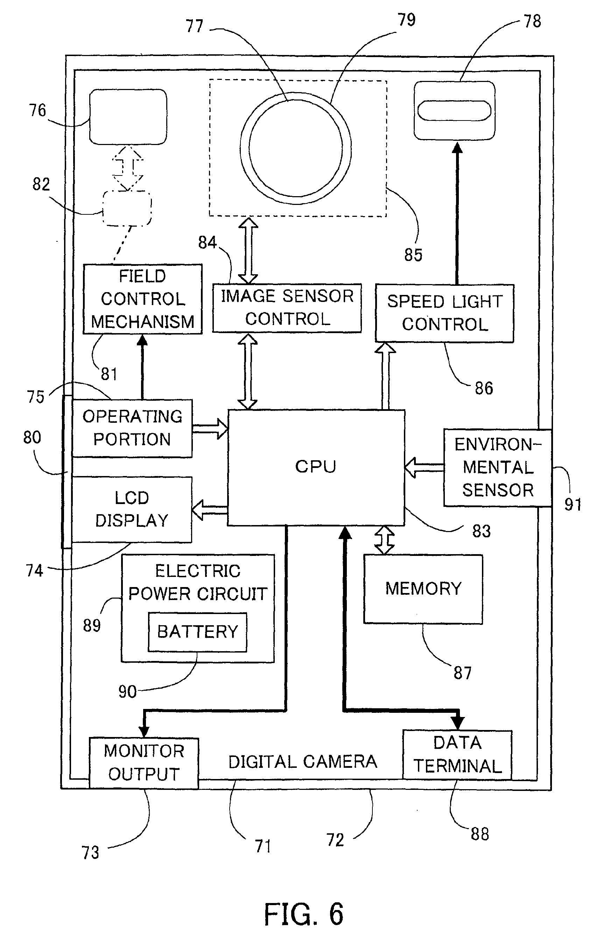

Fig. 6 is a block diagram showing construction of a digital camera suitable for the above-described rental system. The digital camera is stored in a water-resistant housing 71 and the housing 71 is covered by a paper package 72. The water-resistant structure of the housing 71 reduces the possibility for the inside structure of the digital camera to be damaged by contingent treatment at unspecified customer as well as makes cleaning easy when returning the digital camera. However, the water-resistant structure is not explicitly shown. The paper package 72 is used in expectation of getting dirt and damage caused by a single rental, and is removed and changed in consideration of cleanliness whenever the digital camera is returned.

On the paper package 72, windows are opened at respective positions corresponding to a monitor output 73, an LCD display 74, a operating portion 75, a view finder 76, a camera lens 77, a speed light 78, and an environment sensor. The monitor output 73 and the environment sensor 91 are exposed to the outside. A transparent protection glass 79 covers a window corresponding to the camera lens 77 to protect the surface of the camera lens 77 being optically damaged. The protection glass 78 is also changed whenever the digital camera is returned. A similar transparent protection glass also covers the window corresponding to the view finder 76 and is changed likewise. On the other hand, transparent films 80 cover windows corresponding to the LCD display and the operating portion 75 in order to be able to see from outside and to protect them to be got dirt. In addition, the transparent film 80 is made to be flexible to be able to operate the operating portion 75 from outside. The transparent film 80 is also changed whenever the digital camera is returned. A transparent film 80 also covers the widow corresponding to the speed light 78 and is changed as described above.

The above-described embodiment makes it possible to endure a plurality of times of rental with lowered possibility of getting internal damage of the digital camera during rental. Operating position where a customer's hands contact are constructed by low-priced material for replacing every time of rental in order to rent out the digital camera as a brand-new commodity in external appearance.

In order to lower cost, the camera lens 77 is a fixed focal length not including a focusing mechanism. F-number is also fixed. Exposure control is carried out by shutter speed of an electronic shutter with the help of a gain control of the image sensor, which is automatically controlled by a CPU 83 on the basis of a signal from a light sensor, not shown.

The monitor output 73 is, for example, an AV output terminal enable to monitor by outputting a shot image data to an AV input terminal of a TV while renting out a digital camera. The monitor output 73 may be a terminal for outputting image data to a monitor display of a cellular phone instead of the AV output terminal. In any event image signal from the monitor output 73 has relatively small amount in image information in comparison with total shot image signal so as to output to a monitor display within a short time period, so that it is not enough quality to store in an outer memory or make a print.

The LCD display 74 has simple structure, which is not an image display, capable of displaying only letters and marks such as discrimination between a shooting mode and a replay mode, the remaining number of frames to be able to shoot, the frame number output from the monitor output 73, and the frame number to be deleted. Examples of buttons in the operating portion 75 include a button used both as a shutter release button and an operating button, a focal-length-exchange button, a mode exchange button, an image quality exchange button, an up-and-down button for selecting a shot image frame for deleting and monitoring it, and a numeric keypad. How to use these buttons is printed on the paper wrappings 72 in the margin of each window.

In the view finder 76, an wide-angle field frame is commonly arranged. When the focal-length-exchange button in the operating portion 75 is pressed, a telephoto field frame 82 is moved into the visual field of the view finder 76 by operating a field control mechanism 81. The operation exchanging the focal length to the telephoto side by the operating portion 75 is sent to the CPU 83. Although the focal length is exchanged only two steps, a telephoto and an wide-angle, in this embodiment in consideration of the cost, the number of steps can be increased in other embodiment or even a zoom lens type can be applied, which the focal length can be exchanged continuously without steps. In this case, the exchange in the field frame may be multi steps or continuous steps, or a zoom optical system may be introduced in the view finder 76.

The CPU 83 controls a CMOS image sensor 85 having about 3 million pixels capable of random accessing through an image sensor controller 84 and inputs image signals from the image sensor. In this case, when the focal length is set to the telephoto side, only the pixels of a central quarter area of the image sensor corresponding to the telephoto field frame 82 are read out to obtain a fictitious telephoto image. On the other hand, when the focal length is set to the wide-angle side and image quality is set to "normal", a quarter of the whole pixels are read out with pixel skipping from the whole area. In this manner, the embodiment functions as a digital camera capable of shooting a telephoto image and a wide-angle image having about 750 kilo-pixels. Moreover, when shooting a wide-angle image, the whole pixels may be read out to obtain 750 kilo-pixels by adding signals of adjacent four pixels instead of reading out with pixel skipping. In this case, sensitivity is enhanced in comparison with pixel skipping.

When the image quality exchange button is set to "fine", the embodiment is used as a digital camera having three million pixels instead of reading out with pixel skipping or adding signals of adjacent pixels. By the way, in the telephoto state, it is prohibited to set the image quality button to "fine", which means the image quality of three million pixels. In this manner, when the focal length exchange is not carried out, the present embodiment functions as a high image quality digital camera having a semi-wide angle of view with three million pixels.

In another embodiment, when a zoom lens is used as the camera lens, a zoom digital camera having high image quality of three million pixels in any focal length can be composed with relatively high cost.

The CPU 83 controls the speed light 78 through a speed light controller 86. The CPU 83 is connected with a memory 87, stores shot images from the image sensor controller 84 into the memory 87, reads out images stored in the memory 87, and outputs them from the monitor output 73 or a data terminal 88. The memory 87 is not a removable recording medium such as a memory chip but is an ordinary memory chip installed in a digital camera. Accordingly, the cost for the recording medium itself can be reduced, omission of a card driver can also reduce cost, and omission of a slot for inserting/removing a memory card can reduce possibility of being damaged while renting out.

The data terminal 88 outputs digital data of exact amount of image information and information regarding camera usage stored in the memory 87, has a special shape suitable for reading out with a data-readout terminal in the rental center, and does not fit in the input terminal of ordinary user's PC. Accordingly, the data terminal 88 has structure that is covered by the wrappings 72 while the digital camera is renting out as a rental commodity and is exposed to be able to connect to the data-readout terminal only when returned and torn the wrappings 72 off. On the other hand, the data terminal 88 may be constructed such that although the structure of the terminal itself has common shape, the procedure of reading out is made to be special in order to read out efficiently in the rental center. In this case also, the data terminal 88 has structure that is covered by the wrappings 72 while the digital camera is renting out as a rental commodity and is exposed to be able to connect to the data-readout terminal only when returned and torn the wrappings 72 off.

In another embodiment, it may be possible to construct such that the data terminal 88 has a common shape such as USB terminal to be able to read out from the ordinary user's PC, and is exposed to outside by a window formed on the wrappings 72 in order to be able to read out data from user's PC while renting out. In this case, it is premised that customers care the image data by themselves and that prints are made by customer's printer. However, rapid progress of technology regarding PCs, printers as well as digital cameras makes it difficult financially for ordinal customer to replace with the up-to-date model. In the embodiment shown in Fig. 6, not only rental business of digital cameras but also the image-data-readout business for caring and printing are left to professional agents. Accordingly, the customer can enjoy ultra-advanced quality.

A electric power circuit 89 supplies electric power from a battery 90 such as two AA batteries to each portion of the digital camera. Since the digital camera according to the embodiment is designed as a rental commodity to secure enough electric supply while renting out, it is not necessary for the customer to change battery. Therefore, a cap for the battery case storing the battery 90 is covered by the wrappings 72, so that replacement of the battery can be possible only when the camera is returned to the recycle center and the wrapping 72 is removed. In order to control the battery, the recycle center prints the date of battery replacement on the wrappings 72 when the new wrappings 72 is applied after replacing the battery. In a store of the convenience store system such as the first store 53, not only the voltage of the battery but the date of battery replacement are checked. A digital camera whose battery was replaced more than a predetermined time period ago is returned to the rental center as an expiration-of-best-before-date commodity. By using the control method described above, only a digital camera equipped with a battery having enough capacity capable of operating whole rental period is rent out. The information of the returned digital camera is used as the rate of turnover of the digital camera as a rental commodity to the customer and as the state of stock in the store such as the first store 53.

Since the information regarding the date of battery replacement is also stored in the CPU 83, when the enough electric supply cannot be guaranteed in comparison with the estimated return date, the same model capable of being guaranteed is substituted. In addition, the CPU 83 prepares warning regarding the state that the electric power supply cannot be guaranteed comparing the date of battery replacement, the estimated return date, and the date of renting out and warning regarding exceeding the rental period. When image information is output from the monitor output 73, the CPU 83 displays the warning information superimposing onto the image information to display on a TV screen.

Moreover, on observing image from the monitor output 73 shown on a TV screen, the customer can delete unnecessary image, designate the number of sheets to be printed and the size of the print by using the operating portion 75. The designated information is recorded in the memory 87 through the CPU 83 in accordance with a predetermined format. The designated information recorded in the memory together with the image information is read out from the data terminal 88 when returning the digital camera, so that the designated print is carried out. The customer can revise the designation of the print at the rental center when returning the digital camera or input the designation of the print at the rental center when returning the digital camera without inputting the designated information in the digital camera in advance.

The data terminal 88 is also used in the recycle center when checking the function of the returned digital camera. In the recycle center, an inspection apparatus is connected to the data terminal 88 of the returned digital camera, sends various inspection signals to the CPU 83, and checks responses to these inspection signals from the CPU 83 in detail. Accordingly, the functions and quality of respective parts are evaluated in order to conclude whether the digital camera can be recycled as a commodity.

In the environment sensor 91, sensors for easily detecting any one or any combination of temperature, humidity, air pressure, and noise, and a position information sensor on the basis of the GPS system are arranged. Therefore, their outputs when shooting is recorded with reference to the shot image. Moreover, the following information is also recorded with reference to the shot image such as output of the photosensor for exposure control, whether or not speed light is used, whether or not pseudo-telephoto is set, the time of shooting, the time interval to the previous shooting, and the designated number of sheets for the print. When the file number of each image is given serially in accordance with a predetermined rule, how many images had been there between the remained images can be identified, so that the history of the deletion is also recorded with reference to the remained image. These information is read out from the data readout terminal together with the image information when returning the digital camera, sent to the database center to carry out statistical processing and analysis, so that the result is reported to the general center to be reflected in R&D, manufacturing and disposal planning of a next model.

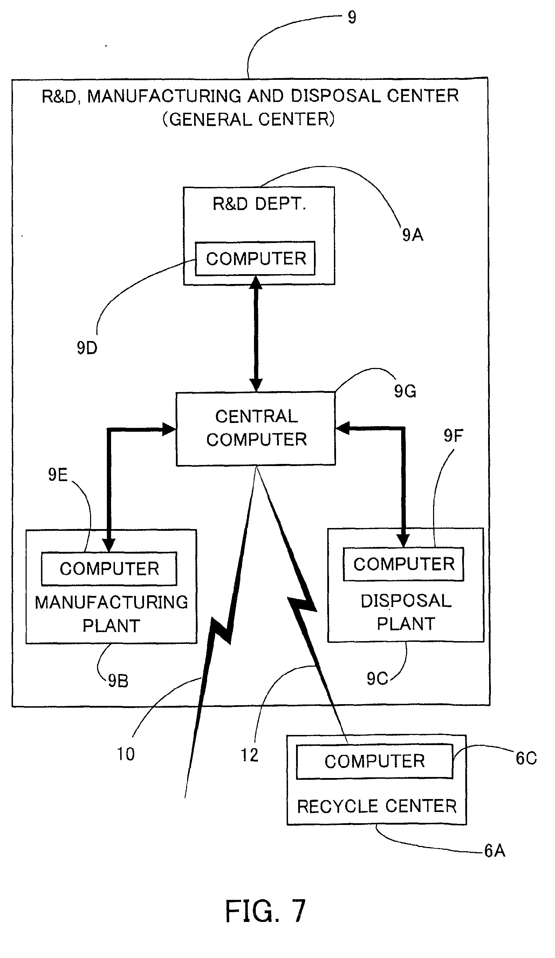

Fig. 7 is a block diagram showing the general center 9 in detail. As described before, the general center 9 receives feedback from the database center 4 and the logistics center 6 through the communication networks 10, 12, respectively, so as to reflect in R&D, manufacturing and disposal planning of a next model. In the general center 9, information is mutually exchanged to reflect in R&D planning of a next model. As shown in Fig. 7, an R&D department 9A, a manufacturing plant 9B, and a disposal plant 9C in the general center 9 exchange information closely with each other by the computer network so as to carry out total cost control throughout the product's life cycle from R&D to disposal. Moreover, the recycle center 6A located in the logistics center 6 has a recycle plant which is included in the information exchange system in the same way as the manufacturing plant 9B and the disposal plant 9C.

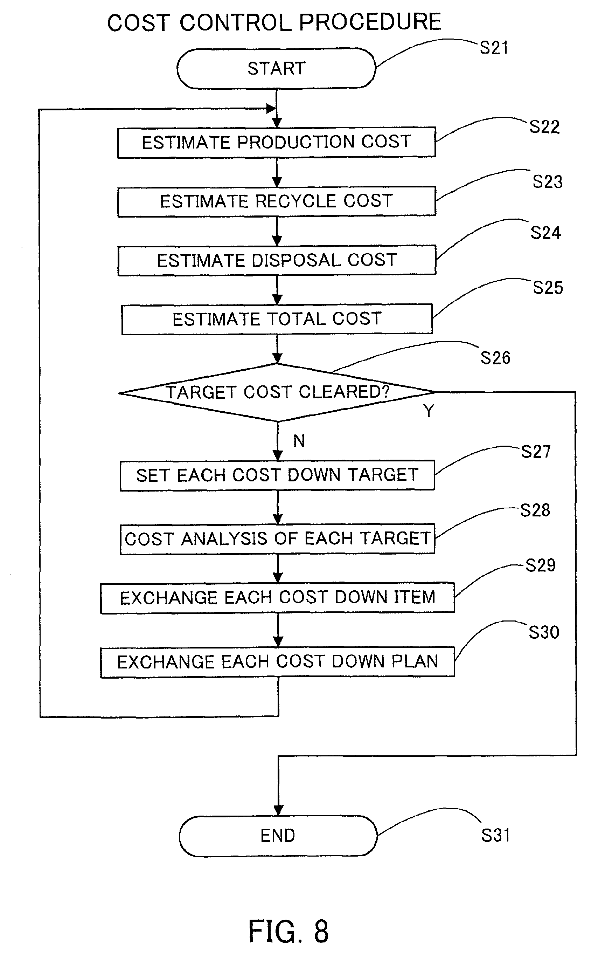

Fig. 8 is a flow chart showing procedure of the cost control and is explained with reference to Fig. 7. In step S21 in Fig. 8, design data of a new model is sent from the R&D department 9A to the manufacturing plant 9B, the disposal plant 9C, and the recycle center 6A, respectively. In step S22, the production cost of the new model is estimated by a computer 9E of the manufacturing plant 9B on the basis of the production performance of the past models and the design data of the new model. In step S23, the recycle cost of the new model is estimated by a computer 6C of the recycle center 6A on the basis of the recycle performance of the past models and the design data of the new model. In step S24, the disposal cost of the new model is estimated by a computer 9F of the disposal plant 9C on the basis of the disposal performance of the past models and the design data of the new model. The order of the steps from S22 to S24 may be set arbitrarily. These steps may also be carried out simultaneously. When all estimation have sent to a central computer 9G of the general center 9, the total cost estimation of the new model is carried out by the central computer 9G in step S25.

In step S26, whether the total cost is cleared the target cost of the business project of the new model or not is checked. When the target cost has not been cleared, the flow goes to step S27. In step S27, the central computer 9G sets the cost down target for each of the manufacturing plant 9B, the recycle center 6A, and the disposal plant 9C. In the procedure to set the cost down target, upon receiving the information regarding voluntary cost down plan from each computer of the manufacturing plant 9B, the recycle center 6A, and the disposal plant 9C, the central computer 9G may adjust each plan. When each cost down target has been set and fed back, cost analysis is carried out by each computer of the manufacturing plant 9B, the recycle center 6A, and the disposal plant 9C and the most effective item for cost down is extracted in step S28.

In step S29, the information regarding the extracted cost down item is exchanged. For example, when a new equipment investment is necessary for a disassembly process of a new model, and when an indication is suggested that the design should be changed to be able to disassemble by an existing equipment, the indication is sent from the computer 9F of the disposal plant 9C to the central computer 9G together with the designated delivery address. The central computer 9G sends the indication to a computer 9D of the R&D department 9A, the computer 9E of the manufacturing plant 9B, or the computer 6C of the recycle center 6A in accordance with the designated delivery address. Another example of cost down item from the disposal plant 9C is that when a portion of a process is to be changed from managerial request of the disposal plant 9C, the disposal plant asks the central computer whether the change complies with the design, the manufacturing, and the recycle of the new model or not.

In the same way, when a rationalization item exists in a manufacturing process, the information is sent from the computer 9E of the manufacturing plant 9B to the central computer 9G together with the designated address. In accordance with the designated address, the central computer 9G sends the information to the computer 9D of the R$D department, the computer 9F of the disposal plant 9C, and the computer 6C of the recycle center 6A. For example of these information, there are such an inquiry to the R&D department whether a design suitable for the rationalization in the manufacturing process is possible or not, and an inquiry to the disposal plant 9C and the recycle center 6A whether the rationalization causes cost up in the disposal process and the recycle process or not.

Moreover, when a rationalization item exists in a recycle process, the information is sent from the computer 6C of the recycle center 6A to the central computer 9G together with the designated address. In accordance with the designated address, the central computer 9G sends the information to the computer 9D of the R$D department, the computer 9E of the manufacturing plant 9B, and the computer 9F of the disposal plant 9C.

Furthermore, when a good designing idea for cost down comes up, the idea is sent from the computer 9D of the R&D department 9A to the central computer 9G together with the designated address. In accordance with the designated address, the central computer 9G sends the idea to the computer 9F of the disposal plant 9C, the computer 9E of the manufacturing plant 9B, and the computer 6C of the recycle center 6A.

As described above, when the information exchange regarding cost down items has completed, in step S30 each division makes a cost down plan on the basis of the information received from the other divisions and submits it for exchanging with each other through the computer network. For example, the reply for the designation regarding design change for using existing equipment submitted from the disposal plant 9C as described above is sent from the computer 9D of the R&D department 9A to the computer 9F of the disposal plant 9C through the central computer 9G. Examples of the information include an answer for the inquiry whether design change of the new model according to the designation is possible or not, and an inquiry whether the design change plan meets the request from the disposal plant 9C or not. Moreover, examples of information sent from the manufacturing plant 9B to the computer 9F of the disposal plant 9C through the central computer 9G include an inquiry whether the change in the manufacturing process meets the request of the disposal plant 9C, and a suggestion of the disposal method in view of the manufacturing plant 9B. Further explanation, however, is abbreviated; a response, a suggestion and a re-inquiry to the information of the cost down item as shown in step S29 are carried out in step S30. Specifically, the execution is carried out by the communication between computers of respective divisions through the central computer 9G.

In the above-described case, although the direct information exchange between two parties is explained, the information exchange in steps S29 and S30 is not limited to this. For example, the indirect information exchange may also be possible such that the manufacturing plant 9B having received design data of the new product from the R&D department 9A forms manufacturing information of the new product on the basis of the design data, and sends the manufacturing information to the disposal plant 9C. In this case, the disposal plant 9C estimates a disposal cost on the basis of the design data information of the new product directly received from the R&D department 9A together with the manufacturing information of the new product received from the manufacturing plant 9B as described above.

The above-described indirect information exchange may happen when estimating the recycle cost in the recycle center 6A. For example, it is the indirect information exchange that the manufacturing plant 9B having received design data of the new product from the R&D department 9A forms manufacturing information of the new product on the basis of the design data, and sends the manufacturing information to the recycle center 6A. In this case also, the recycle center 6A estimates a recycle cost on the basis of the design data information of the new product directly received from the R&D department 9A together with the manufacturing information of the new product received from the manufacturing plant 9B as described above.

Further explanation, however, is abbreviated; in steps S29 and S30, various kinds of information exchange may be possible between the R&D department 9A, the manufacturing plant 9B, the disposal plant 9C, and the recycle center 6A.

On completion of the information exchange in step S30, the flow returns to step S22. In steps S22 through S25, the cost is re-estimated in consideration of the information received in steps S29 and S30. In step S26, when the re-estimated cost does not clear the cost target, the steps starting from step S27 are repeated. In this manner, the steps from S22 to S30 are repeated until the cost target has been cleared. When the cost target is cleared, the flow goes to step S31 to complete this flow.

In general commodity, the business cost includes development, manufacturing, distribution, and sales. However, in the present invention, the business cost includes those costs, in addition, for returning the commodity, recycle, re-distribution, and disposal.

In Fig. 8, the business cost control triggered by the development of the new product has been explained. The system shown in Fig. 7 burdens each division with the business cost control triggered by making the parts use in common with a plurality of models. From this point of view, information regarding planning and practice of the cost down is transmitted from computers 9D, 9E, 9F of respective divisions under control of the central computer 9G. The information is obtained commonly within computers 9D, 9E, 9F of respective divisions through the central computer 9G to be exploited in each division.

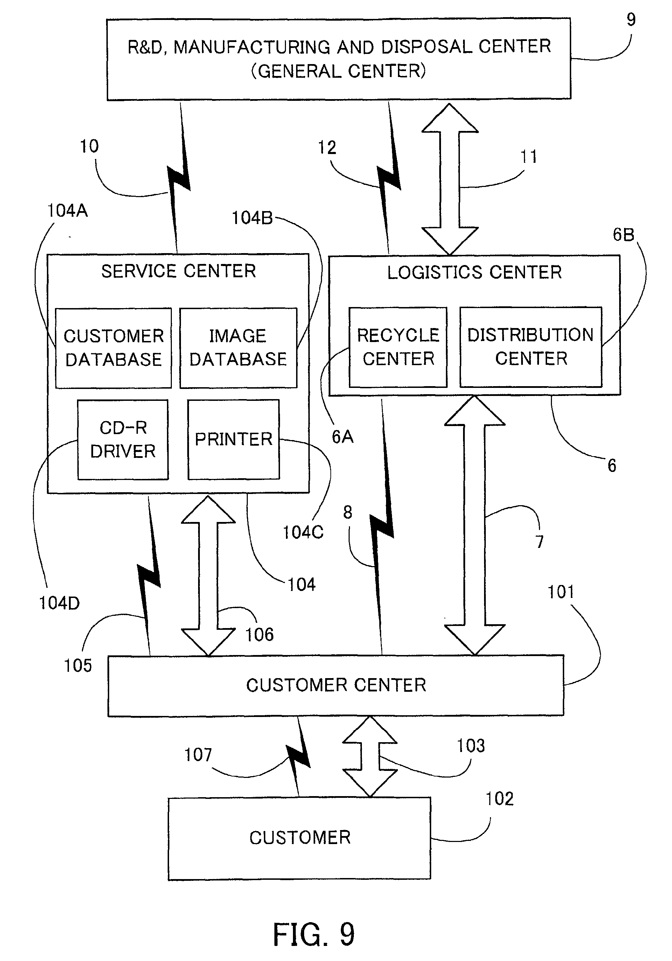

Fig. 9 is a block diagram showing a case that a digital camera is distributed as an ordinary commodity not as a rental one according to a third embodiment of the present invention. The logistics center 6, the general center 9, the distribution routes 7, 11, the communication networks 8, 10,12 are the same as the first embodiment shown in Fig. 1, so the duplicated explanation is abbreviated by attaching the same reference number.

In the third embodiment, a customer center 101 functions as the sole window for a customer 102. At first, it sells digital cameras to the customer 102 as a camera store. A delivery route 103 includes a case for sales on the store as well that for delivery of an order. However, the delivery route 103 is not a one-way traffic. On purchasing a digital camera, the customer 102 makes a maintenance and disposal contract with the customer center 101. According to the contract, the customer 102 returns the digital camera to the customer center 101 through the delivery route 103 when performing repair, conversion, upgrading, and replacement of the digital camera. The returned digital camera is sent to the logistics center 6 through the distribution route 7 and is further sent to the general center 9 through distribution route 11 to be disposed of if necessary. These functions are the same as the first embodiment, so the detailed explanations are abbreviated.

Although a customer can dispose of the digital camera by oneself when it falls into disuse because of replacement or the like, the cost of the disposal becomes higher than that of returning to the customer center 101 with making the maintenance and disposal contract. Assuming that arbitrary disposal disobedient to a predetermined procedure is prohibited by law because of the global environment.

The customer center 101 may be located scatteringly in a lot of locations as a store where customers visit directly. On the other hand, the customer center 101 may be concentrated as a single center when the sales pattern is non-store retailing such as mail order and the Internet sales.

The system according to the third embodiment also carries out various service business other than the sales of digital cameras. The sales includes print service, service for writing on a CD-R, service for keeping of the shot image data, etc. The customer 102 can enjoy the service by directly visiting the customer center 103 or by accessing to the customer center 101 from the customer's PC through the Internet to receiver or transmit necessary image data and image order data.

On purchasing a digital camera or applying the service, new customer's customer control information such as name, address, telephone number, mail address, credit card number, etc. is recorded in the customer center and a customer ID number is issued. In the case of a new customer, privacy information such as age, sex, etc. is also input in the customer database 4A with the consensus of the customer. Moreover, information regarding camera usage included in the shot images with the consensus of the customer. These points are the same as the first embodiment.

A service center 104 has a customer database 104A, a image database 104B, a printer 104C, and a CD-R driver 104D. The functions of these elements are the same as the first embodiment, so the explanation is abbreviated. However, in the third embodiment, the printer 104C and the CD-R driver 104D are arranged in the service center, so that the print printed by the printer 104C or the CD-R recorded image data by the CD-R driver 104D is sent to the customer center through the distribution route 106 in accordance with the customer's request. In the third embodiment, all windows in connection with the customer are concentrated in the customer center, so that the customer does not get lost. All communication necessary for the service is exchanged between the customer center 101 and the service center 104 through a communication network 105.

General center 9 takes charge of general function including ordinary research and development, manufacturing as well as disposal. Although the general center 9 may usually be one in a single rental system, the general center 9 may be divided into more than one according to circumstances. Moreover, a plurality of functions of a general center 9 may be divided into a plurality of centers locating in different locations.

It is the same as the first embodiment that the general center 9 receives statistical information of commercial distribution of the customer database 4A to reflect in R&D, manufacturing and disposal planning of a next model. In this case, since the majority of the sold commodity is collected through disposal, the market information can be obtained.

In the third embodiment described above, since disposal function of the general center 9 is included in the product circulation, no digital camera is come out from the rental system as a reject, so that zero-emission for the global environment can be accomplished.

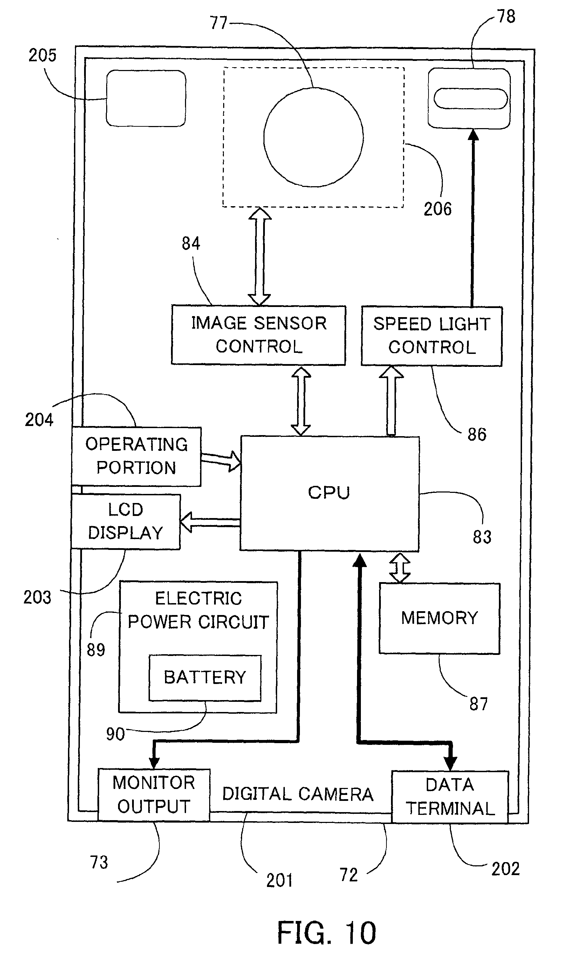

Fig. 10 is a block diagram showing construction of a digital camera according to a fourth embodiment of the present invention. The digital camera is circulate as a used-up-in-a-short-term commodity on the basis of recycle such as a disposal camera not as a rental camera. In the fourth embodiment also, it is considered as a standard distribution mode that the digital camera storing digital image information regarding shot images is returned including the camera for print. However, since this is not a rental system, the property right of the digital camera belongs to the purchaser. Accordingly, it is the system that the user can dispose the used digital camera at user's own responsibility after reading out digital image data into a user's PC without returning it. In the explanation below, the construction in common with the system shown in Fig. 6 is attached with the same reference number and the duplicated explanation will be abbreviated.

The digital camera shown if Fig. 10 is stored in a plastic housing 201 and the housing 201 is covered by a paper package 72. When the digital camera storing the digital image information regarding shot images has been returned for the print and when the digital camera is possible to be recycle after the image data has been read out, the paper package 72 is removed and replaced.

On the paper package 72, windows are opened at respective positions corresponding to a monitor output 73, a data terminal 202, an LCD display 203, an operating portion 204, a view finder 205, a camera lens 77, and a speed light 78. Different from the embodiment shown in Fig. 6, each construction is exposed to outside for the purpose of cost down.

The LCD display 203 is the same one denoted by the reference number 74 in Fig. 6. The operating portion 204 has the similar construction as the operating portion 75 shown in Fig. 6 except the focal-length-exchange button and the image quality exchange button are left out. Moreover, the view finder 205 has a very simple construction having only one field frame in accordance with the camera lens 77 having an wide-angle field of view without the focal-length-exchange mechanism.

An image sensor 206 uses a device having the highest cost performance such as a CCD with about 2 million pixels. Information of all pixels of whole area is always read out by the image sensor controller 84 and the CPU 83.

In order to output digital data information having the same quantity of image information stored in the CPU 83, the data terminal 202 is constructed with a commonly used data terminal such as USB, so that an user can arbitrarily read out image data into the user's PC or print out through the terminal. It is also possible for a user to obtain the same effect of telephoto image obtained with the system shown in Fig. 6 by oneself by using edit function of the user's PC, cutting off the central portion of an original image, and enlarging it. When a user has edited a shot image by using the user's PC, the edit image can be returned to the memory 87 of the digital camera through the data terminal 20. In this case, it is possible to make a print order bringing a digital camera in which the edit images together with ordinary shot images are stored.

The construction of the electric power circuit 89 and the battery 90 is the same as that shown in Fig. 6. In the digital camera shown in Fig. 10, the wrappings 72 cover a cap for the battery case storing the battery 90, so that the customer cannot replace the battery by oneself.

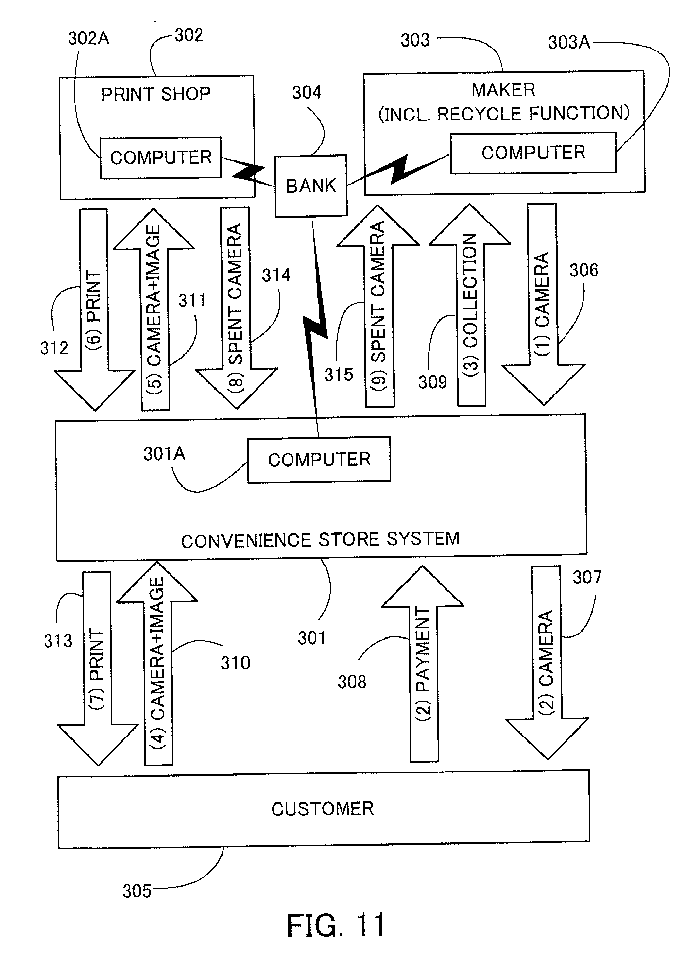

Fig. 11 is a block diagram showing a service system according to the fourth embodiment of the present invention. In the service system, an existing convenience store system 301 and an existing print shop 302 work with a digital camera maker 303. By the way, the digital camera maker 303 has a recycle function for a digital camera. The convenience store system 301 has an ordinary stock and distribution system and the distribution center 57 shown in Fig. 3 acts the function of a hub in the logistics system. The arrows 306, 309, 315, 314, 311, 312 described later denote distribution using the ordinary stock and distribution system in the convenience store system 301. Although the distribution system is actually carried out through the distribution center 57 as shown in Fig. 3, for the purpose of simplicity we do not make mention of this point in the following explanation. The print shop 302 carries on the business by receiving the print order on the basis of digital image data from the customer and delivering the print to the customer by using an existing home delivery service in response to the customer's request. Likewise, the print shop carries on the service for keeping digital image data in response to the customer's request. The fourth embodiment is accomplished by the cooperation of the existing systems. By the way, the convenience store system 301, the print shop 302, the maker 303 have computers 301A, 302A, 303A, respectively for the purpose of the cooperation to be able to communicate with a bank 304 by a network such as the Internet.

The service system shown in Fig. 11 will be explained below in order of distribution shown with the reference number (1) through (9) attached to each arrow. At first, the convenience store system 301 lays in a stock of digital cameras from the maker 303 or a store by using the ordinary stock route shown by an arrow 306. Composition of the stock price and the way of payment will be explained later. The stocked digital cameras are displayed in the convenience store in the same way the other commodities are displayed.

A customer 305 purchases a digital camera as shown in an arrow 307 and pays the price as shown in an arrow 308. As described later, the price includes everything including print cost for the digital image, so that the customer 305 purchased the digital camera can enjoy every service without paying further. The payment of the purchasing digital camera is made, for example, at the store of the convenience store system 301 in cash. Without visiting a store, the customer may purchase a digital camera by assuming that the arrow 307 denotes the delivery by the distribution system of the convenience store system 301 and the arrow 308 denotes the direct debit of the bank account by a credit card.

An arrow 309 denotes the case that the unsold digital camera is returned from the convenience store system 301 to the maker 303. The return is made when the mode has become outdated to be unpopular or when the capacity of the battery cannot be guaranteed because of a long-term display on the store. This is the same as an expiration-of-best-before-date commodity in the fresh food. Adjustment of an account on returning is also described later.

The customer 305 purchased the digital camera returns the digital camera stored digital images to the convenience store after shooting and makes a print order as shown in the arrow 310. The customer may make the order at the store of the convenience store system 301 or may ask the distribution system for collecting the camera. The convenience store system 301 delivers the digital camera stored digital images to the print shop 302 by the distribution system as shown in an arrow 311.

The print shop 302 reads out digital image information from the received digital camera to make print. The completed print is delivered to the convenience store system 301 for being delivered to the customer 305 through the distribution system as shown in an arrow 312. The customer 305 receives the completed print at the store as shown in an arrow 313. The arrow 313 may denote the case that the customer 305 receives the print by the home delivery through the distribution system of the convenience store system 301.

On the other hand, the used digital camera having been read out the digital image information is returned to the maker 303 through the convenience store system 301 as a hub to be provided for recycle as shown in arrows 314 and 315. The reason to go through the convenience store system 301 is to prevent from making a new distribution route between the print shop 302 and the maker 303 other than the convenience store system 301. Accordingly, the arrows 306, 309, 315 are carried out by the regular shuttle service of the convenience store system 301 reciprocally moving between the convenience store system 301 (specifically the distribution center 57 shown in Fig. 3) and the maker 303. It is needless to say that a direct service that directly delivers the used digital camera from the print shop 302 to the maker 303 may be provided. Anyway, regarding the necessary distribution of the service, the stock and distribution system of the convenience store system 301 is effectively used.

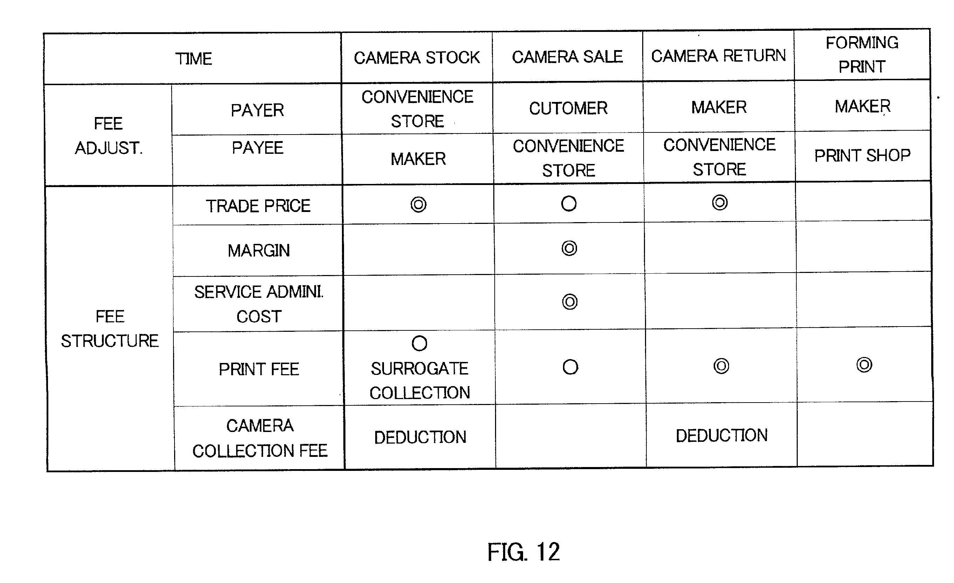

Fee adjustment between the convenience store system 301, the print shop 302, and the maker 303 is carried out between each account in the bank 304 on the basis of the communication between computers 301A, 302A, and 303A and the communication between each computer and the bank 304. Fig. 12 is a table showing summarized fee structure and fee adjustment in which the symbol marks ⓞ and ○ show a degree of relevance. The other points are described in the Fig. 12.

As shown in Fig. 12, when a digital camera is stocked, the maker 303 charges the total amount of a trade price of the digital camera and a print fee to the convenience store system 301. Among them, the print fee is a surrogate collection for the print shop. In this case, delivery cost for recovering used camera carried out by the convenience store system 301 in stead of the maker 303 as shown in the arrows 314 and 315 is deducted from the total amount. The symbol mark ⓞ in Fig. 12 denotes the final receiver of the charge. When the digital camera is stocked, the final receiver of the trade price of the camera is the maker 303. However, the recovery cost of the camera is deducted as described above.

In the embodiment described above, when a digital camera is stocked, the recovery cost of the camera is deducted from the trade price for all cameras in advance regardless of whether the camera is actually recovered or not. This has a shade of meaning of a consignment fee from the maker in order for the convenience store system to construct the system for recovering digital camera. There is another embodiment other than that described above that although the above-mentioned deduction is not carried out when a digital camera is stocked, the convenience store system 301 charges the maker 303 with the camera recovery cost in accordance with the result when the recovery of the used camera as shown in the arrows 314 and 315 is actually happened. Anyway, the recovery of the camera is consigned to the convenience store system 301 having the distribution system from the maker and the camera recovery cost is charged to the maker 303 by the convenience store system 301.

Then, at the time of camera sales, the convenient store system 301 charges the customer 305 the summation of the sales price (trade price and margin) of the digital camera, print fee, and print service administration cost indicated by the arrows from 310 to 313 (including print delivery cost shown in the arrows 311 and 312). Among them, the amount of the print fee is the same at the time of stocking the camera. The final receiver of the margin and the service administration cost at the time of camera sales is the convenience store system 301.

In fee adjustment at the time of returning the camera in comparison with the time of stocking the camera, only the relation of the payer and the payee is reversed, but the fee structure or the summation of the fee does not change. By the way, although the print fee at the time of stocking the camera was a surrogate collection by the maker 303, the print was not made at the time of returning the camera, so that the convenience store system 301 as a final receiver receives the refund including the print fee from the maker 303. Specifically, the fee adjustment is not carried out item by item but the difference between the stock and the return is adjusted collectively between the convenience store system 301 and the maker 303, for example, at the end of each month. In the example mentioned above, full amount of stock price with respect to the returned camera is refunded by the maker 303 to the convenience store system 301. This is the case, for the purpose of simplicity, that all responsibility for the sales of the digital camera is burdened on the maker 303, so the convenient store system 301 does not take any risk. When the responsibility of the product planning exists in the convenience store system 301, the convenience store system 301 naturally bear the loss caused by unsold commodity.

At the time of forming print, the print shop 302 charges the print fee actually generated while printing to the maker 303. The fee is the same as that collected by the maker 303 as surrogate collection when the digital camera was stocked. The final receiver of the print fee is naturally the print shop 302.

The print fee and the service administration cost are both charged to the customer in advance on the assumption that the print is carried out. This promotes that the used camera is recycled by the maker 303 through the print shop 302 in order to accomplish a zero-emission society. Not returning the digital camera means that the customer has intentionally given up the print service, so the customer owes the charge. Therefore, the prepaid print fee and the service administration cost are divided between the maker 302 and the convenience store system 301, respectively, which bear the risk for keeping the system.

By using the above-described business model, the convenient store system 301, the print shop 302, the maker 303, and the customer 305 obtain the following advantages. In the convenience store system 301, digital cameras are expected as very promotable commodities contributing to profit. Adding the print service administration may increases turnover rate of the stock distribution system so as to be able to lower the cost. Moreover, adding the print service administration as an attraction is effective to increase sales of all commodities.

The print shop 302 can secure large orders and save the trouble of taking order and delivering print. As long as the print order receives through the convenient store system 301, the print shop 302 collects the print fee only from the maker 303 not from the individual customer, so that accounting becomes simple.

The maker 303 can obtain an effective sales route and a means for distributing the commodity without investing on its own account. Since the customer 305 can make print order and receive print by using distribution route of the convenience store system 301, the customer can receive the print with much less delivery cost in comparison with making print order with delivering through ordinary home delivery service.

As described above, working each existing system in cooperation results in enhancing convenience for the customer as well as contributing realization of a zero-emission society. Although the fourth embodiment is not a rental system, the great portion of the digital camera can be collected by making print order. Moreover, since the system is not a rental system, it is not necessary for the maker 303 or the convenience store system 301 to control rental commodities, so that the print order may be controlled separately from the sales of the digital camera.

In the above-described explanation, although the digital camera distributing in the system according to the fourth embodiment has the construction shown in Fig. 10, it is needless to say that the digital camera may have the construction, for example, shown in Fig. 6 not limiting to that shown in Fig. 10.

The digital camera distributing in the fourth embodiment has the following merits over the disposal camera. The customer can shoot again any number of times. The customer can confirm images by using a TV before making a print order. The customer can ask to keep the digital image data. The customer can read in the digital image data to the customer's PC for processing it if necessary.

The business model cooperating with the existing systems such as the maker, the convenience store system, and print shop using the distributing system of the convenience store system does not limit the object to the digital camera. It is possible for the business model to apply to the distribution of the disposal camera. When it is applied to the disposal camera, the service administration cost being received by the convenience store system is not charged at the time of sales shown in Fig. 12. It may be charged to the customer when the customer brings a camera, finished shooting, for making a print order or when the customer receives the print delivered to the convenience store system.

Furthermore, the system shown in Figs. 11 and 12 can be applied to the rental commodity having the charge system such as shown in Fig. 5. In this case, the maker shown in Figs. 11 and 12 may be considered as the rental shop. The "stock of a camera" may be understood as the stock for the rental. In this case, trade price of a camera may be considered as "trade price of the rental", so that it means the share for the rental shop in the rental fee. The "sales of a camera" may be considered as the "camera rental". In this case, the net rental fee for a customer is the "trade price of the rental" added by the margin of the convenience store system. The service administration cost and the print fee is added to this as the same manner as the fourth embodiment.

As described above, when the charge system shown in Fig. 5 is applied, the print fee in the state of the "stock of a camera" and "camera rental" corresponds to the "basic fee" in Fig. 5 and differs from the "print fee" actually charged to the "rental shop" from the print shop at the time of "making print" . The procedure to return the difference and additional charge for excess rental term are adjusted between the customer 305 and the convenience store system 301 at the time shown in the arrows 310 and 313 in Fig. 11. The fee adjustment is carried out between the convenience store system 301 and the rental shop (substitution of the maker 303) communicating between computers 301A and 303A and with the bank 304.

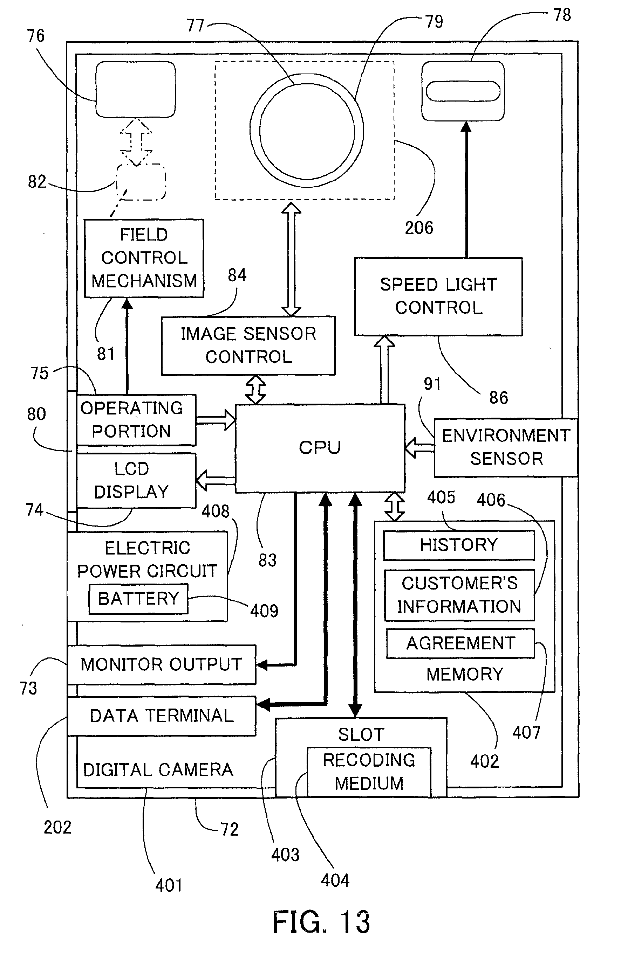

Fig. 13 is a block diagram showing construction of a digital camera according to a fifth embodiment of the present invention. The component having the similar construction as Figs. 6 and 10 is attached the same reference number so as to abbreviate duplicated explanation. The digital camera 401 according to the fifth embodiment is an ordinary digital camera, not a rental camera nor a disposable commodity. The digital camera 401, however, is composed in consideration of recycle and collection after being made redundant. Image data is stored in a recording medium 404 such as a memory card capable of attaching to a slot 403 for the memory medium, not in a memory 402.

Image data as well as usage data in connection with the image data are stored in the memory medium 404. When a customer uses the image data and the usage data stored in the memory medium 404, the image data and the usage data can be read out by removing the memory medium 404 from the slot 403 and inserting to a slot for the memory medium of an outside PC. Moreover, the customer can read out the image data and the usage data by connecting the data terminal 202 to an outside PC.

The memory 402 has a historical memory 405 that records various usage data of the digital camera 401. Examples of data includes the usage data being the same one stored in the recording medium 404, the output of the environmental sensor 91, output of the photosensor for exposure control, whether or not speed light is used, whether or not pseudo-telephoto is set, and the time of shooting. As the usage history, not only the data when shooting but the history of operation prior to shooting and the history of readout operation using the operating portion 75 can be stored. Moreover, the dates of shipment, wholesale, sales are also stored in the historical memory 405.

The memory 402 has a customer information memory 406 that stores various data regarding the customer. Examples of the data includes customer's administration information such as customer's name, address, telephone number, mail address, credit card number, customer's setting data regarding shooting and image processing, camera usage contract with the customer, and the password. The memory 402 has an agreement data memory 407 that stores the condition designated by the customer to each information whether it is permitted to be read out or not.

Each information stored in the memory 402 is kept in the digital camera 401 after the information has been read out from the recording medium 404 through the slot 403, so that the whole usage history from shipment to collection of the digital camera 401 can be stored.

When a digital camera 401 is collected, each information stored in the memory 402 is read out at the collected place in accordance with the agreement stored in the agreement data memory 407, sent to the database center to be statistically processed and analyzed. The result is sent to the general center to be reflected in R&D, manufacturing and disposal planning of a future model. Furthermore, the customer information read out at the collected place from the customer information memory 406 in accordance with the customer's agreement can be transcribed upon customer's request to the memory of a replacing camera or a bought-at-the-other-place camera brought in the convenience store system 301 together with a disposing camera.

Each information stored in the memory 402 is automatically input in the process of distributing and using the camera and is input or changed by the sales person or the customer using the operation portion 75 with the help of the LCD display 74. In the course of ordinary use of the digital camera, the customer is prohibited from reading out each information stored in the memory 402. In particular, the information stored in the memory 402 is read out through the data terminal 202 in accordance with a particular protocol unable to be used by the customer. Moreover, it is possible to prohibit the customer from reading out by changing the shape of the data terminal 202 having a particular shape unable to be accessed by the customer. Furthermore, in order that the customer cannot access, the data terminal for reading out data stored in the memory 402 may be covered by the wrappings in response to Fig. 6. In addition, when it is constructed that the data is read out by a non-contact readout means such as a radio wave, the data can be effectively read out at the time of collection, so that it meets the purpose to prohibit the customer's access.

In the digital camera 401 according to the fifth embodiment shown in Fig. 13 being different from those shown in Figs. 6 and 10, customers can change the battery 409 by themselves by opening the cap of the battery cell 408.

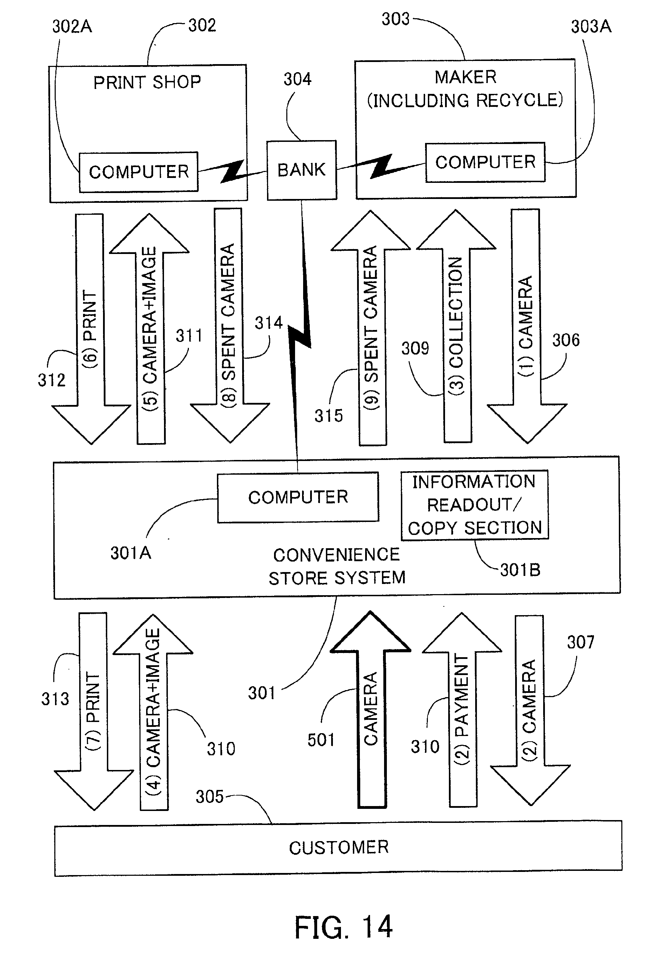

Fig. 14 is a block diagram showing a collection service system according to the fifth embodiment. Since the most functions of it are the same as those shown in Fig. 11, the same reference number is attached to the same composition so as to abbreviate the duplicated explanation. In the service system shown in Fig. 14, the collection and the sales for replacement of the digital camera 401 according to the fifth embodiment shown in Fig. 13 are carried out in addition to the distribution of the disposal commodity shown in arrows (1) through (9).

In Fig. 14, the convenience store system 301 stocks the digital camera 401 from the maker 303 or the outlet store by using the ordinary stock route shown in the arrow 306. The recycle cost is included in the stock price. The recycle cost is a fee that the designated maker 303 can charge when shipping the digital camera 401 and a part of it is paid to the recycle administrative organization through the bank 304. The digital camera 401 stocked by the convenience store system 301 is displayed in the store as same as other commodities.

The customer 305 visited to the convenience store system 301 purchases the digital camera as shown in the arrow 307 and pays the fee as shown in the arrow 308. The recycle cost paid by the convenience store system 301 to the maker 303 at the time of stock is shifted to the fee. Thus, the customer 305 pays the recycle cost at the time of purchasing the digital camera bearing the cost occurring in the future.

In the service system shown in Fig. 14, the convenience store system 301 plays the role of a collection center for the spent, unnecessary digital camera 401. It is assumed that the low prohibits from disposing the digital camera to any place other than the designated place. The arrow 501 denotes that the customer 305 brings in the spent digital camera 401 to the convenience store system 301. The digital camera 401 brought in the convenience store system 301 is sent to an information readout/copy section 301B and information is read out in accordance with the customer's agreement. The digital camera 401 having been read out information is returned to the maker 303 through the regular shuttle service of the convenience store system 301 reciprocally moving between the convenience store system 301 and the maker 303 to be put into recycle. When the process has been carried out by the convenience store system 301, the recycle administration organization pays a predetermined recycle cooperation fee per one digital camera to the convenience store system 301 through the bank 304.

Moreover, the customer information read out at the an information readout/copy section 301B from the customer information memory 406 in accordance with the customer's agreement can be transcribed upon customer's request to the memory of a replacing camera or a bought-at-the-other-place camera brought in the convenience store system 301 together with a disposing camera.

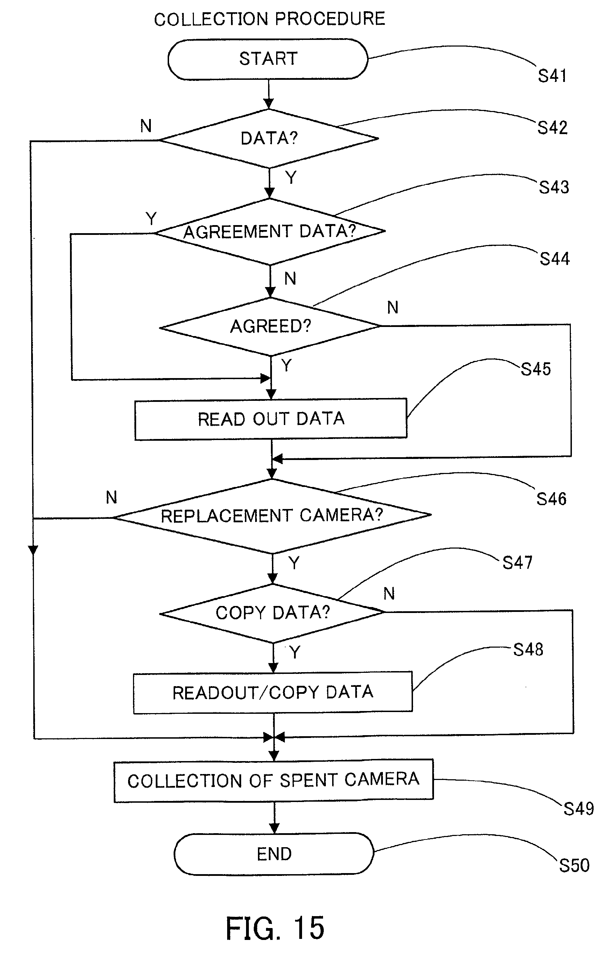

Fig. 15 is a flow chart showing a collection procedure carried out by the computer in the information readout/copy section 301B of the convenience store system 301 shown in Fig. 14. The flow starts from step S41 when a spent digital camera is brought in the convenience store system 301. In step S42, whether the digital camera stores the data to be read out is checked. When the data is there, the flow goes to step S43. In step S43, whether there is agreement data, which the customer agrees to read out data, in the agreement data memory 407 or not is checked.

When the agreement data is not there, the flow goes to step S44. In step S44, it is confirmed at the store of the convenience store system 301 whether the customer agrees to read out data or not. When the customer agrees, the information of agreement is stored in the computer of the information readout/copy section of the convenience store system 301 and the flow goes to step S45. In step S45, the information stored in the historical memory 405 is read out and the flow goes to step S46. In step S45 however, the information stored in the customer information memory 406 is not read out unless otherwise specially agreed.

On the other hand, in step S43, when the agreement data is there in the agreement data memory of the spent digital camera, the flow goes to step S45. In step S44, when the agreement cannot be obtained, the flow proceeds to step S46 skipping step S45.

In step S46, it is checked whether there is a camera that the customer is going to purchase for replacement in the convenience store system 301 or a camera that the customer has already bought and brought in the convenience store system 301 together with a spent digital camera. The result is input to the computer of the information readout/copy section 301B. When the replacement camera is there, the flow goes to step S47. In step S47, whether the customer requests for copy or not is checked and the result is input to the computer of the information readout/copy section 301B. Then, the flow goes to step S48. In step S48, the customer information stored in the customer information memory 406 of the spent digital camera is read out and copied to the customer information memory of the replaced camera. When the readout/copy has completed, the flow goes to step S49. In step S49, the spent digital camera having been collected is instructed to the next process. Specifically, the spent digital camera having been collected is returned to the maker 303 as shown in the arrow 315 and the flow completes in step S50.

On the other hand, in step S42, when the data to be read out including the customer's information is not exist, the flow goes to step S49. In step S46, when there is no camera for replacement, the flow goes to step S49 skipping steps S47, S48. In step S47, when there is no request for the copy, the flow goes to step S49 skipping step S48.

A recycle system according to a sixth embodiment of the present invention is explained below.

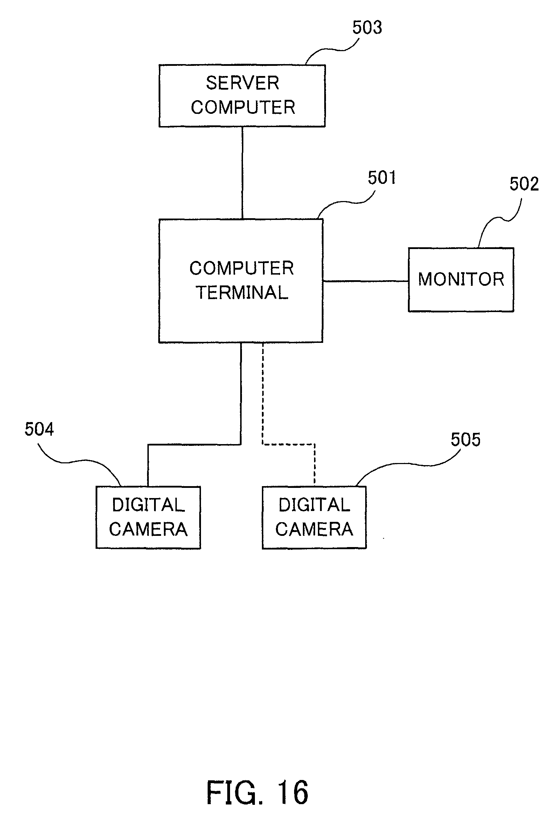

At first, the construction of the recycle system is explained. Fig. 16 is a block diagram showing the construction of the recycle system according to the sixth embodiment of the present invention. The recycle system is composed of a computer terminal 501, a monitor 502, a server computer 503, and digital cameras 504 and 505.

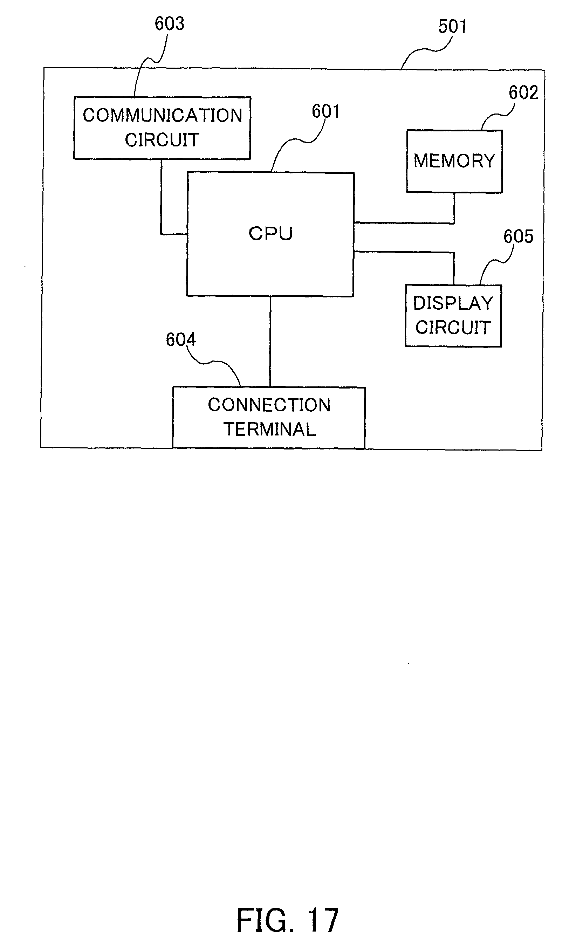

The computer terminal 501 plays a main part of the recycle system being connected with the monitor 502, the server computer 503, and the digital cameras 504 and 505. The inner composition of the computer terminal 501 is shown in Fig. 17.

Fig. 17 is a functional block diagram showing the inner composition of the computer terminal 501. The computer terminal is composed of a CPU 601, a memory 602, a communication circuit 603, a connector 604, and a display circuit 605. The memory 602 stores a control program described later. The CPU 601 is a circuit for carrying out the control program.

The monitor 502 displays an image signal generated by the display circuit 605 in the computer terminal 501.

The server computer 503 being run by a maker which manufactured the digital camera 504 and 505 is connected with the computer terminal 501 via a communication network such as the Internet. The server computer 503 has a memory for storing an image data shot by a digital camera and a shooting condition data of the digital camera.The digital camera 504 having been used by a user is brought for recycle. The digital camera 505 is newly purchased by the user. Each digital camera 504 or 505 has the function of a cellular phone, respectively.

Then, the control procedure of the recycle system according to the sixth embodiment is explained.

The recycle system carries out the control that reads out setting information regarding the shooting condition and the like stored in the digital camera 504 being collected for recycle and registers the setting information read out from the digital camera 504 with the digital camera 505 purchased newly. In the recycle system, a lot of setting information can be transferred from the digital camera 504 to the digital camera 505. Examples of setting information includes time, font of a letter, registered word, customer name, custom setting, setting for shooting (resolution, compression method, used auto focus area, and setting for speed light), image correction, provider, all kinds of password, contract, credit card, telephone directory, mail address, and profile of the customer. When the digital camera has the function other than camera such as payment and commuter pass as well as cellular phone, the setting information further increases.

By using the recycle system, the customer can use the newly purchased digital camera 505 under the same setting as the used digital camera 504 without inputting the various setting information from the beginning.

It is desirable that the computer terminal 501 in the recycle system is arranged at a window where the digital camera 504 is collected for recycle. The customer who wants the setting information to transfer from the digital camera 504 to 505 goes to the collection window to carry out registration and returns the digital camera 504 to the window after completion of the registration. As a result, collection rate of the digital camera for recycle increases.

The control procedure carried out by the recycle system according to the sixth embodiment of the present invention is specifically explained below.

The recycle system explained here is an example that the computer terminal 501 is arranged at a digital camera store where the newly purchased digital camera and the collecting digital camera for recycle are distributed together. The optimum control method is explained under the condition that the collecting digital camera 504 and the newly purchased digital camera exist together.

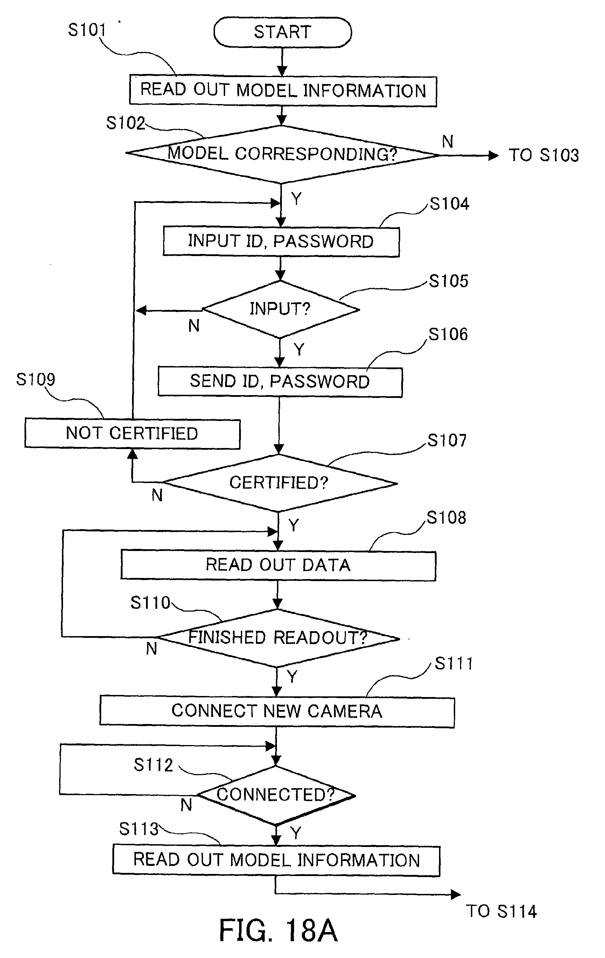

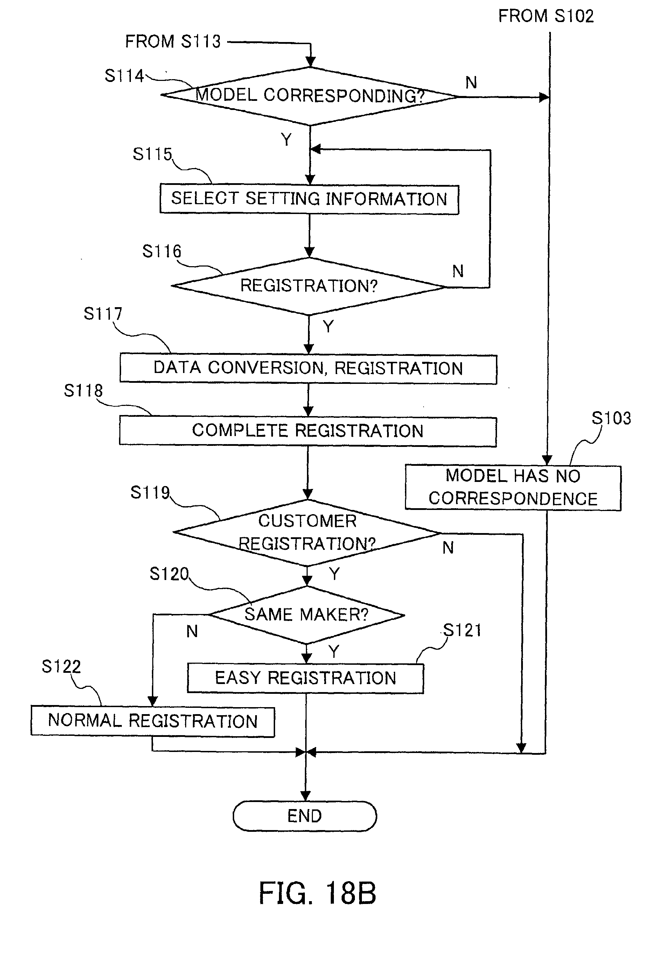

Figs. 18A and 18B are flow charts showing the control procedure carried out by the computer terminal 501 of the recycle system. The flow starts when the system detects that the digital camera 504 is connected to the connector 604 of the computer terminal 501.

In step S101, model information is read out from the connected digital camera 504. In step S102, whether the digital camera 504 is the model corresponding to the program or not is discriminated on the basis of the readout model information. When the digital camera 504 is corresponding to the program, the flow goes to step S104. Otherwise, the flow goes to step S103. In step S103, the monitor 502 shows the notation that the connected digital camera does not correspond to the program and the flow comes to an end. In step S104, a certification page is shown on the monitor 502. The certification page demands to input necessary information to certify the owner of the digital camera 504. In the sixth embodiment, the certification page demands to input customer ID number and password provided when purchasing. The reason why certification is carried out is to prevent a person other than the owner of the digital camera 504 from obtaining the setting information and the like stored in the digital camera 504.

In step S105, whether certification information is input to the certification page or not is checked. When the information is input, the flow goes to step S106. Otherwise, the flow returns to step S104. In step S106, in order to check whether the input information is correct or not, the certification information is sent to the server computer 503. Moreover, the data stored in the digital camera 504 is read out to send to the server computer 503 of the maker. The information sent to the maker is those information in connection with shooting history such as total number of shooting and the like stored in the digital camera 504, which can be reflected in R&D and marketing of the digital camera available in the near future. The information in connection with the customer's privacy is not sent.

In step S107, whether the server computer 503 certifies it or not is checked. When it is certified, the flow goes to step S108. Otherwise, the flow goes to step S109. In step S108, showing on the monitor 502 that it is certified, the system automatically reads out setting information such as setting for shooting and the like from the digital camera 504. On the other hand, in step S109, the notation that it is not certified is shown on the monitor 502 and the flow returns to step S104. In step S110, whether the readout has completed or not is checked. When the readout has completed, the flow goes to step S111. Otherwise, the flow returns to step S108 to continue reading out.

In step S111, the setting information read out from the digital camera 504 is deleted. Moreover, a page demanding to connect the new digital camera 505 is shown on the monitor 502. In step S112, whether the digital camera 505 is connected or not is checked. When the camera is connected, the flow goes to step S113. Otherwise, the flow returns to step S111.

In step S113, the model information is read out from the connected digital camera 505. In step S114, whether the digital camera 505 is the model corresponding to the program or not is discriminated. When the digital camera 505 corresponds to the program, the setting information such as setting for shooting and the like read out from the digital camera 504 can be converted to a data suitable for the digital camera 505. When the digital camera 505 corresponds to the program, the flow goes to step S115. Otherwise, the flow goes to step S103.

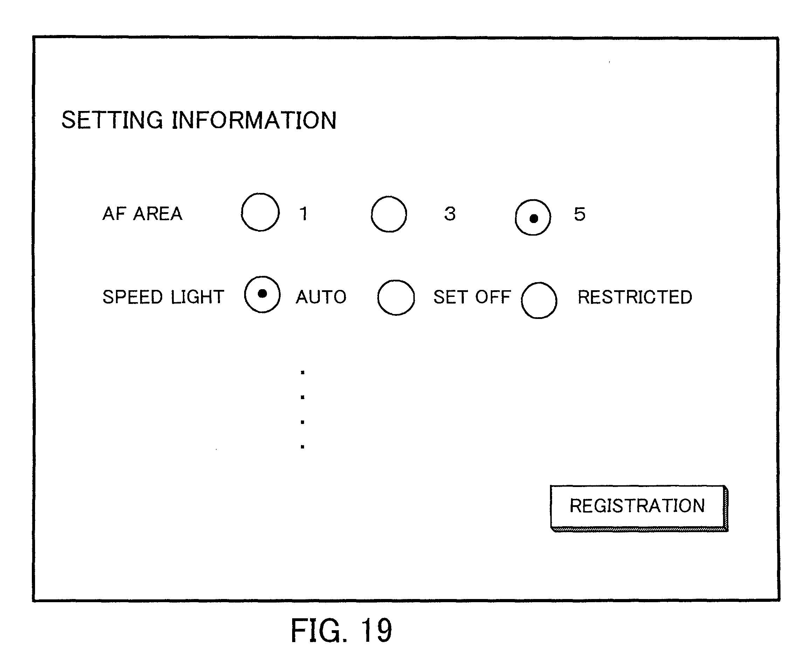

In step S115, a page for selecting setting information to be registered with the digital camera 505 is displayed on the monitor 502. The customer can select the setting information to be registered. This is because there is a possibility that the newly purchased digital camera 505 should not use the setting information read out from the digital camera 504 since the new digital camera 505 usually has higher specification in comparison with the digital camera 504. For example, it is assumed that the digital camera 504 has 3 areas of the AF (Auto Focus) area capable of selecting area 1 or area 3. On the other hand, the digital camera 505 has 5 areas of the AF area capable of selecting area 1, area 3, or area 5. When the customer had used the AF setting of area 3 in the digital camera 504, the page capable of selecting area 5 which permits to increase reliability is shown on the display without automatically setting area 3 to the digital camera 505. An example of the selection page is shown in Fig. 19. In the selection page in Fig. 19, items to be select and alternatives of the items are generated in accordance with the function of the digital camera 505.

The item whose setting has not been changed from the initial setting at the time of shipment of the digital camera 504 is not changed from the initial setting at the time of shipment of the digital camera 505. In the item whose function has improved in the digital camera 505 than 504, the better setting is automatically selected. For example, in the item of the AF area in the selection page, area 5 is selected as an initial setting instead of area 3. In addition, in the selection page in Fig. 19, a registration button is arranged. On clicking the registration button, the data is registered with the connected digital camera 505.

The explanation returns to the flow chart shown in Figs. 18A and 18B. In step S116, whether the registration button arranged in the selection page is clicked or not is checked. When the registration button is clicked, the flow goes to step S117. Otherwise, the flow returns to step S115. In step S117, the setting information read out from the digital camera 504 is converted to the data form able to be used by the digital camera 505 and is registered with the digital camera 505. Naturally, the data is not converted when the data read out from the digital camera 504 can be used for the digital camera 505 without conversion.

In step S118, a page notifying the completion of the registration with the digital camera 505 is shown on the monitor 502. A customer registration button for moving to the customer registration is arranged in the page. By clicking the customer registration button, the customer can successively carry out the customer registration for the digital camera 505 by using the computer terminal 501. At that time, the customer can complete the customer registration with a minimum input by using the information read out from the digital camera 504 and the customer information of the digital camera 504.

In step S119, whether the customer registration button is clicked or not is checked. When the customer registration button is clicked, the flow goes to step S120. Otherwise, the flow goes to the end.

In step S120, whether the maker of the digital camera 504 and that of the digital camera 505 are the same or not is checked. When the makers are the same, the flow goes to step S121. Otherwise, the flow goes to step S122. In step S121, since the customer information has already registered at the time of registering the customer information of the digital camera 504, the customer registration of the digital camera 505 is completed without newly registering information. The customer ID number and the password are the same as those obtained for the digital camera 504.

On the other hand, in step S122, the ordinary customer registration is carried out. When the registration has completed in accordance with the instruction, a new customer ID number and a password are issued.

As described above, if the computer terminal 501 of the recycle system is placed at the sales window of the camera store carrying out both camera sales and collection for recycle, the setting information such as setting for shooting regarding the old digital camera for recycle can be handed over to the new digital camera when purchasing the new digital camera. In order to use the recycle system, the customer brings the old camera to the camera store, so that the old camera can be collected effectively.

Since the system prohibit reading out data stored in the digital camera without certifying the customer, misuse of the data stored in the old camera can be prevented.

In the embodiment, the certification data input by the customer is checked by the server computer 503 connected with the digital camera. However, the certification may be carried out in the digital camera by storing the certification data in the digital camera in advance.

In the recycle system, since the customer can carry out the customer registration as well as data registration with the new digital camera, the customer can carry out the customer registration on the occasion of data registration with the new digital camera.

Then, a recycle system according to a seventh embodiment of the present invention is going to be explained.

The recycle system of the embodiment uses a customer's PC in stead of the computer terminal 501.

A terminal of the customer's PC is used as the computer terminal 501 of the system shown in Fig. 16. This program is provided by a program CD-ROM attached with a newly purchased digital camera 505 and is set up to the computer terminal 501 by the customer. By the way, the computer terminal 501 located in the customer's home has the environment capable of using a network such as the Internet.

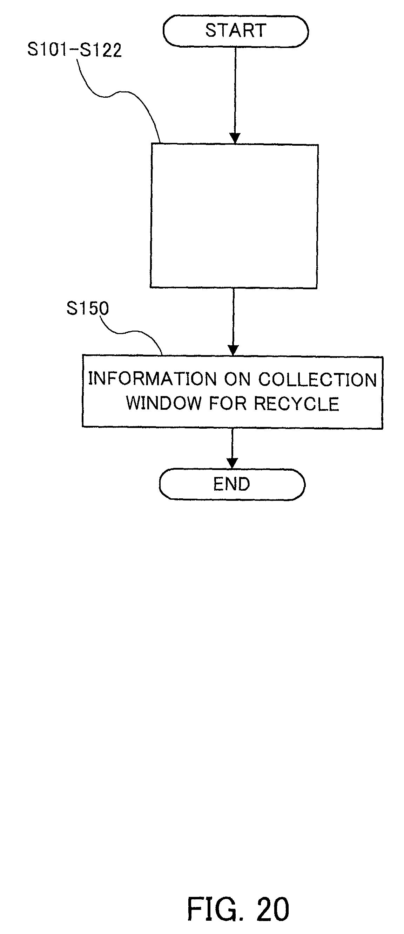

Fig. 20 is a flow chart showing the recycle system according to the seventh embodiment of the present invention. The system starts when a digital camera 504 is connected to the computer terminal 501 as described in the flow chart shown in Figs. 18A and 18B.

The control procedure also carried out in the program from step S101 to step S122 as same as the flow shown in Figs. 18A and 18B, so the duplicated explanation is eliminated.

Then, the flow proceeds to step S150 after step S122.

In step S150, a page showing the contact address and the like of the collection window for recycle is shown on the monitor 502. The nearest window to the customer is provided on the basis of the registered address information of the customer.

In the system, since the place of the registration is not the place of collection for recycle, the place of collection is displayed last so as to increase the rate of collection.

Moreover, when the system reads out setting information from the old camera and only registers the read out setting information with the new digital camera converting the data suitable for the new camera, it can be realized under the circumstances that the computer terminal 501 cannot communicate the server computer 503 through a network such as the Internet.

A recycle system according to an eighth embodiment of the present invention is going to be explained. The eighth embodiment is particularly effective when you fail to bring a newly purchased digital camera with you at the collecting place for the old digital camera or you have not purchased a new digital camera.

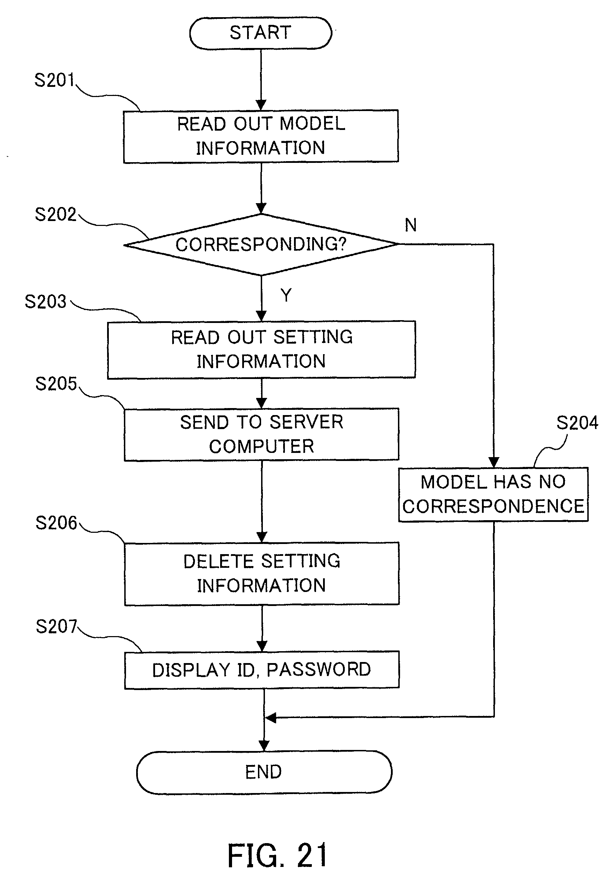

You can use the service for temporally keeping the data read out from the old digital camera. The service is explained specifically with reference to Fig. 21.

Fig. 21 is a flow chart showing the control of the recycle system according to the eighth embodiment. The flow starts when the system detects that the digital camera 504 for collection is connected to the computer terminal 501.

In step S201, the model information of the connected digital camera 504 is read out. In step S202, whether the digital camera 504 is the model corresponding to the program is checked. When the camera is corresponding to the program, the flow goes to step S203. Otherwise, the flow goes to step S204. In step S204, the notice that the camera is not corresponding to the program is displayed, and the flow comes to an end.

On the other hand, in step S203, the setting information such as the setting for shooting stored in the digital camera 504 is read out. In step S205, the setting information is transferred to the server computer 503 to store in the memory in the server computer 503. In step S206, the setting information stored in the digital camera 504 is deleted. In step S207, the customer ID number and the password for accessing the memory in the server computer 503 are displayed on the monitor 502.

By controlling the system as described above, the digital camera 504 whose setting information such as setting for shooting is read out and is deleted is collected by the maker or a collecting agent for recycle.

Then, the procedure for registering the temporally kept data in the server computer 503 with the newly purchased digital camera 505 is explained.

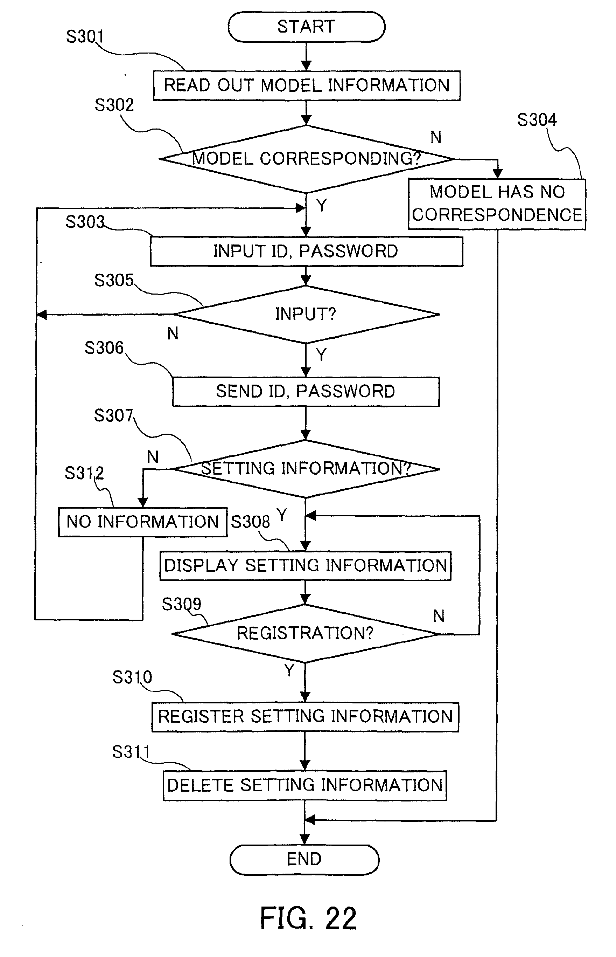

Fig. 22 is a flow chart showing the control procedure of the recycle system according to the eighth embodiment. The flow starts when the system detects that the new digital camera 505 is connected to the computer terminal 501. Whether the connected digital camera is a newly purchased camera or an old digital camera is automatically detected by the shooting history data stored in the camera.

In step S301, the model information of the connected digital camera 505 is read out. In step S320, whether the model of the digital camera 505 is corresponding to the program or not is checked. When the model is corresponding to the program, the flow goes to step S303. Otherwise, the flow goes to step S304.

In step S304, a notification that the model of the digital camera is not corresponding to the program is displayed on the monitor and the flow comes to the end. In step S303, a page for inputting the customer ID number and the password is displayed on the monitor 502. The customer ID number and the password are those displayed on the monitor 502 in step S207 shown in Fig. 21. In step S305, whether the customer ID number and the password are input or not is checked. When those are input, the flow goes to step S306. Otherwise, the flow returns to step S303.

In step S306, the system is connected to the server computer 503 and searches the setting information according to the customer ID number and the password. In step S307, whether the setting information according to the customer ID number and the password is there or not is checked. When the information is there, the flow goes to step S308. Otherwise, the flow goes to step S312.

In step S308, a page showing the setting information is displayed on the monitor 502. An example of the page showing the setting information is similar to the one shown in Fig. 19. In step S309, whether the registration button is clicked or not is checked. When the button is clicked, the flow goes to step S310. Otherwise, the flow returns to step S308. In step S310, the setting information is registered with the connected digital camera 505. In step S311, the setting information temporally stored in the memory in the server computer 503 is deleted.

On the other hand, in step S312, a page describing the notification that there is no setting information temporally stored in the memory in the server computer 503 is displayed on the monitor 502 and the flow returns to step S303.

As described above, in the recycle system according to the eighth embodiment, by temporally storing the setting information in the memory, the setting information can be registered with the new digital camera even if the old digital camera from which the setting information is read out and the new digital camera to be registered the setting information do not exist at the same time.

Moreover, in the recycle system according to the eighth embodiment, by temporally storing the setting information in the memory of the server computer 503, the setting information can be registered with the new digital camera from any computer terminal other than that having read out the setting information.

Furthermore, the recycle system may construct such that a plurality of programs are provided to each model or each maker of the digital camera so that when a digital camera is connected to the terminal, the system automatically identifies the model and the maker of the connected camera to start the program corresponding to the model.

Furthermore, the program may be provided by downloading from the web site of each maker and not be provided by the CD-ROM.

Furthermore, the program may be provided by online service of the web site.

A rental system according to a ninth embodiment of the present invention is explained below. The construction of the rental system according to the ninth embodiment is similar to the construction of the recycle system according to the sixth embodiment explained with reference to Fig. 16 except the control program, so duplicated explanation will be abbreviated.

The server computer 503 being owned by the rental company is connected to a plurality of computer terminals 501 placed in the rental shops, capable of communicating with each terminal 501. Since the digital cameras 504 and 505 are rental cameras, the readout and registration of the setting information are carried out repeatedly.

The control procedure of the rental system when renting out a digital camera is explained.

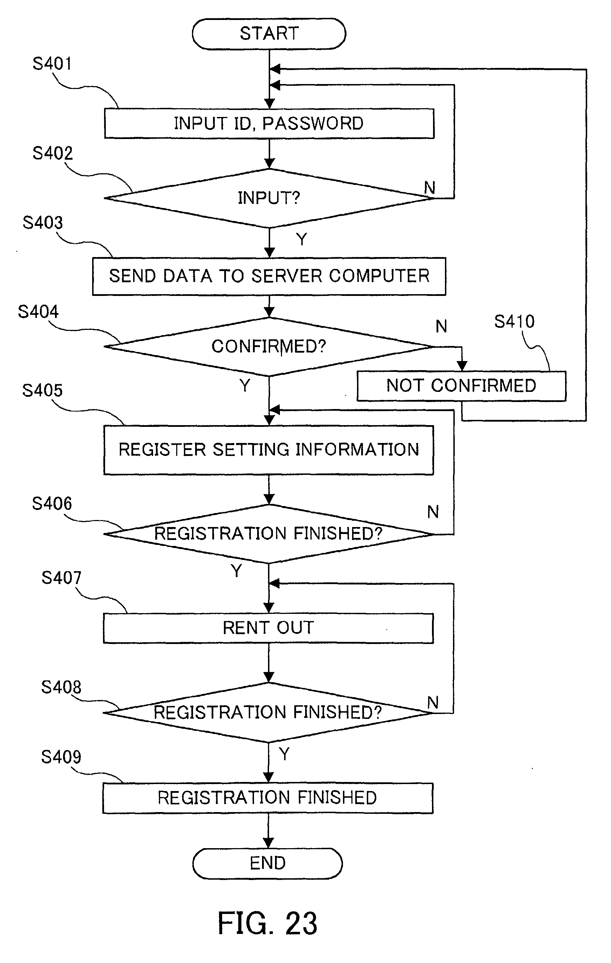

Fig. 23 is a flow chart showing the rental procedure of the rental system according to the ninth embodiment. The flow starts when the system detects that a digital camera is connected to the computer terminal 501 at the time of renting out the digital camera.

In step S401, a page for inputting the customer ID number and the password is displayed on the monitor 502. If you had ever rented out a digital camera before, you input the customer ID number and the password issued before. In step S402, whether the customer ID number and the password are input or not is checked. When they are input, the flow goes to step S403. Otherwise, the flow returns to step S401.

In step S403, the customer ID number and the password are sent to the server computer 503. In step S404, whether the customer ID number and the password are confirmed or not is checked. When they are confirmed, the flow goes to step S405. Otherwise, flow goes to step S410.

In step S405, the setting information in accordance with the customer ID number is read out from the server computer 503 and is registered with the digital camera connected to the terminal. In step S406, whether the registration of the setting information with the digital camera has completed or not is checked. When it has completed, the flow goes to step S407. Otherwise, the flow returns to step S405. In step S407, all information for renting out is generated and is registered with the digital camera. The information for renting out includes the date of renting out, the store of renting out, and accessories of the renting out.

On the other hand, in step S408, whether the registration of the information for renting out has completed or not is checked. When it has completed, the flow goes to step S409. Otherwise, the flow returned to step S407. In step S409, a page showing completion of the registration is displayed on the monitor 502. In step S410, a page showing that the registration has failed is displayed on the monitor 502 and the flow returned to step S401.

Then, the control procedure for collecting digital cameras according to the rental system is explained.

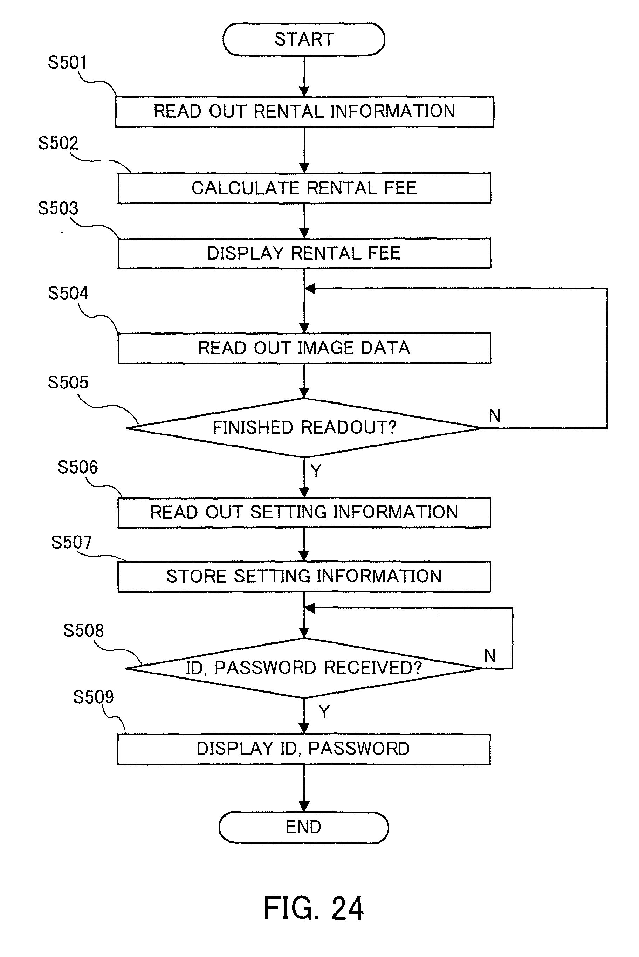

Fig. 24 is a flow chart showing the control procedure for collecting digital cameras according to the rental system of the ninth embodiment. The flow starts when the system detects that a digital camera is connected to the computer terminal 501 at the time of collecting the rental camera. In step S501, the rental information registered when renting out is read out from the digital camera. In step S502, the rental fee is calculated on the basis of the rental information. In step S503, a page showing the rental fee is displayed on the monitor 502.

In step S504, image data is read out from the memory of the connected digital camera. In step S505, whether the reading out of image data has completed or not is detected.

In step S506, the setting information such as the setting for shooting stored in the memory of the digital camera is read out. In step S507, the setting information such as the setting for shooting is stored in the server computer 503 by connecting to the sever computer 503. In step S508, whether the customer ID number and the password for reading out the setting information at the time of next renting out have been received from the server computer or not is checked. When they have been received, the flow goes to step S509. Otherwise, the flow stays in step S508 to continue checking. In step S509, a page showing the customer ID number and the password is displayed on the monitor 502.

As described above, by keeping the registered data in the server computer, the rental system according to the ninth embodiment makes it possible to register the setting information from any rental store other than the same one.

By storing rental information in the digital camera, the rental system makes it possible to return the digital camera to any rental store other than the one where renting out the digital camera. By the way, rental information may be stored in the server computer instead of the digital camera.

## Claims

1. A digital camera comprising:
a release member to cause storage of a digital image;
a function unit operable upon the storage of the digital image;
a memory that stores the status of the function unit upon every storage of the digital image caused by the release member, the memory of status being kept without deletion to be a history of the status of the function unit; and
an output of the contents of the memory to the outside of the digital camera, the user being forbidden to use the output.

2. The digital camera according to claim 1, wherein the output is to be used when the digital camera is returned for a recycle.

3. The digital camera according to claim 1, wherein the output is of a special shape different from a standard shape in common uses.

4. The digital camera according to claim 1, wherein the output is on a special protocol different from a standard protocol in common uses.

5. The digital camera according to claim 1, wherein the output is covered.

6. The digital camera according to claim 1, wherein the function unit includes an electronic flash unit.

7. The digital camera according to claim 1, wherein the function unit includes a zooming unit.

8. The digital camera according to claim 1, wherein the memory of status being kept within the digital camera even if the storage of digital image is removed from the digital camera.

9. The digital camera according to claim 1, wherein the status of the function unit is a value with which the function unit operates.

10. The digital camera according to claim 1, wherein the status of the function unit is whether or not the function unit operates upon the storage of the digital image.

11. The digital camera according to claim 1, wherein the function unit includes a sensor of an environment of the digital camera.

12. The digital camera according to claim 1, wherein the memory is adapted to further store the time when the release member causes the storage of the digital image.

13. The digital camera according to claim 1, wherein the memory is adapted to further store the history of delivery of the digital camera.

14. The digital camera according to claim 1, wherein the memory is adapted to further store an authorization by the user to use the output.

15. The digital camera according to claim 1, wherein the memory is adapted to further store data peculiar to the user.

16. The digital camera according to claim 1, further comprising a second member to cause a second function incapable of being caused by the release member, wherein the memory is adapted to further store information of the second function.

17. A digital camera comprising:
a release member to cause a storage of a digital image;
a sensor of an environment of the digital camera;
a memory that stores the output of the sensor upon the storage of the digital image caused by the release member, the memory of the output of the sensor being kept without deletion to be a history of the output of the sensor; and
an output of the contents of the memory.

18. The digital camera according to claim 17, wherein the sensor includes at least one of a thermometer, a hygrometer, a barometer, a noise meter and a global positioning system for sensing the environment of the digital camera.

19. A digital camera comprising:
a release member functioning to cause a storage of a digital image;
a function unit operable upon the storage of the digital image;
a memory that stores the time when the release member causes the storage of the digital image upon every storage of the digital image caused by the release member, the memory of the time being kept without deletion to be a history of the function of the release member; and
an output of the contents of the memory to the outside of the digital camera, the user being forbidden to use the output.

20. A digital camera comprising:
a release member to cause a storage of a digital image;
a function unit operable upon the storage of the digital image;
a memory that stores the history of delivery of the digital camera; and
an output of the contents of the memory to the outside of the digital camera, the user being forbidden to use the output.

21. A digital camera comprising:
a release member to cause a storage of a digital image;
a function unit operable upon the storage of the digital image;
a memory that stores data relating to the usage of the digital camera;
an output of the contents of the memory to the outside of the digital camera; and
a memory that stores an authorization by the user to use the output.

22. A digital camera comprising:
a first member to cause a first function relating to a storage of a digital image;
a second member to cause a second function incapable of being caused by the first member;
a memory that stores information of the second function in response to the second member, the memory of the information being kept without deletion to be a history of the second function; and
an output of the contents of the memory to the outside of the digital camera.

23. The digital camera according to claim 22, wherein the second function relates to a playback of the stored digital image.

24. A recycle method of a digital camera having a memory for storing data other than digital image comprising the steps of:
receiving the digital camera returned from a user;
confirming an authorization by the user to take out the contents of the memory;
taking out the contents of the memory on the confirmation of authorization; and
putting the returned digital camera to a recycle.

25. The recycle method according to claim 24, further comprising a step of transferring the taken-out contents of the memory to a database.

26. The recycle method according to claim 24, further comprising a step of transferring the taken-out contents of the memory to a site of designing digital cameras.

27. The recycle method according to claim 24, wherein the putting step includes a step of transferring the returned digital camera to a site of recycling digital cameras.

28. The recycle method according to claim 24, wherein the confirming step includes a step of taking a sign of the authorization out of the returned digital camera.

29. The recycle method according to claim 24, wherein the data in the memory is a history of the usage of the digital camera.

30. The recycle method according to claim 24, wherein the data in the memory is a history of the delivery of the digital camera.

31. The recycle method according to claim 24, wherein the data in the memory is peculiar to the user of the returned digital camera.

32. The recycle method according to claim 31, further comprising a step of transferring the taken-out contents of the memory to a new digital camera gotten by the same user.

33. The recycle method according to claim 31, further comprising a step of transferring the taken-out contents of the memory to a new digital camera to be gotten by the same user.

34. The recycle method according to claim 24, further comprising a step of purchasing commodities irrelevant to the digital camera with a transportation system and a step of selling the commodities at a place where the digital camera is returned, wherein the putting step includes a step of transporting the returned digital camera with the transportation system.

35. A recycle method of a digital camera comprising the steps of:
purchasing with a transportation system commodities irrelevant to the digital camera;
selling the commodities;
receiving the returned digital camera at a place where the commodities are sold; and
transporting with the transportation system the returned digital camera to a recycle.

36. The recycle method according to claim 35, wherein the selling and receiving steps are carried out at a convenience store.

37. A recycle method with a computer for a digital camera having a memory storing data other than digital image comprising the steps of:
taking out the contents of the memory of a first digital camera; and
transferring the taken-out contents of the memory to the memory of a second digital camera.

38. The recycle method according to claim 37, wherein the data in the memory is peculiar to the user of the first and second digital cameras.

39. The recycle method according to claim 37, wherein the data in the memory is the data set by the user of the first digital camera.

40. The recycle method according to claim 37, wherein the data set by the user is a condition on the exposure.

41. The recycle method according to claim 37, wherein the data in the memory is font data for display.

42. The recycle method according to claim 37, further comprising a step of authenticating the user of the first digital camera.

43. The recycle method according to claim 37, wherein the all steps are carried out at a place where the first digital camera is returned.

44. The recycle method according to claim 37, wherein the all steps are carried out at a place where the second digital camera is gotten.

45. The recycle method according to claim 37, wherein the digital cameras are connected with the computer by one of the wire and wireless system.

46. The recycle method according to claim 37, wherein the digital cameras are connected with the computer through a network.

47. The recycle method according to claim 37, wherein the computer has storage for storing the taken-out contents.

48. The recycle method according to claim 37, further comprising a step of deleting the taken-out contents in the storage.

49. The recycle method according to claim 37, further comprising a step of transferring the taken-out contents of the memory to a site of designing digital cameras.

50. The recycle method according to claim 37, further comprising a step of deleting the contents of the memory of the first digital camera after taking out the same.

51. The recycle method according to claim 37, wherein the transferring step includes a step of converting the taken-out contents into a form suitable for the second digital camera.

52. The recycle method according to claim 37, further comprising a step of registering the second digital camera to a customer database.

53. A rental method with a computer for a digital camera having a memory storing data other than digital image comprising the steps of:
taking out the contents of the memory of a first digital camera; and
transferring the taken-out contents of the memory to the memory of a second digital camera.

54. The rental method according to claim 53, wherein the digital camera has a memory storing digital image, and wherein the method further comprises a step of taking out the digital image form the memory of the first digital camera.

55. A digital camera comprising a first memory for storing variables characteristic of the use of the camera and means for restricting access to the first memory.

56. A method of recycling a digital camera having a memory which includes the steps of:
receiving the digital camera from a first user;
transferring the contents of the memory to a storage means; and
delivering the camera to a second user.

57. A method of collating data characteristic of the use of a digital camera, the camera including a first memory, which includes the steps of:
storing the data in the first memory;
controlling the access of a user to the first memory; and
reading the data.
